(19) Europäisches Patentamt
European Patent Office
Office européen des brevets

(11) **EP 4 472 192 A1**

(12) **EUROPEAN PATENT APPLICATION**

(43) Date of publication:
**04.12.2024 Bulletin 2024/49**

(21) Application number: **24177653.3**

(22) Date of filing: **23.05.2024**

(51) International Patent Classification (IPC):
***H04N 13/128*** (2018.01)

(52) Cooperative Patent Classification (CPC):
**H04N 13/128;** H04N 2013/0081

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.06.2023 US 202363470702 P**

(71) Applicant: **Apple Inc.**
**Cupertino, CA 95014 (US)**

(72) Inventors:
• **CHAPDELAINE-COUTURE, Vincent**
**Cupertino, 95014 (US)**

• **BLANCHET, Jean-Nicola F.**
**Cupertino, 95014 (US)**
• **SHANKAR, Krishna**
**Cupertino, 95014 (US)**
• **GAN, Lingwen**
**Cupertino, 95014 (US)**
• **KIM, Hanme**
**Cupertino, 95014 (US)**
• **SHI, Xiaojin**
**Cupertino, 95014 (US)**
• **VARGHESE, Gijesh**
**Cupertino, 95014 (US)**
• **BAQAI, Farhan A.**
**Cupertino, 95014 (US)**

(74) Representative: **Zacco Denmark A/S**
**Arne Jacobsens Allé 15**
**2300 Copenhagen S (DK)**

(54) **METHOD AND DEVICE FOR REFINING A DEPTH MAP**

(57) In one implementation, a method of performing perspective correction is performed by a device including an image sensor, a display, one or more processors, and non-transitory memory. The method includes: capturing, using the image sensor, an image of a physical environment; obtaining a first depth map including a plurality of depths respectively associated with a plurality of pixels of the image of the physical environment; generating a second depth map by aligning one or more portions of the first depth map based on a control signal associated with the image of the physical environment; transforming, using the one or more processors, the image of the physical environment based on the second depth map; and displaying, via the display, the transformed image.

In one implementation, a method of performing perspective correction is performed by a device including an image sensor, a display, one or more processors, and non-transitory memory. The method includes: capturing, using the image sensor, an image of a physical environment; obtaining a first depth map including a plurality of depths respectively associated with a plurality of pixels of the image of the physical environment; selecting one or more portions of the first depth map based on a control signal associated with the image of the physical environment; generating a second depth map by refining the one or more portions of the first depth map; transforming, using the one or more processors, the image of the physical environment based on the second depth map; and displaying, via the display, the transformed image.

Figure 1

Description

TECHNICAL FIELD

The present disclosure generally relates to systems, methods, and devices for performing perspective correction.

BACKGROUND

In various implementations, an extended reality (XR) environment is presented by a head-mounted device (HMD). Various HMDs include a scene camera that captures an image of the physical environment in which a user is present (e.g., a scene) and a display that displays the image to the user. In some instances, this image or portions thereof can be combined with one or more virtual objects to present the user with an XR experience. In other instances, the HMD can operate in a pass-through mode in which the image or portions thereof are presented to the user without the addition of virtual objects. Ideally, the image of the physical environment presented to the user is substantially similar to what the user would see if the HMD were not present. However, due to the different positions of the eyes, the display, and the camera in space, this may not occur, resulting in user discomfort.

BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.

Figure 1 is a block diagram of an example operating environment in accordance with some implementations.

Figure 2 illustrates an example scenario related to capturing an image of physical environment and displaying the captured image in accordance with some implementations.

Figure 3 is an image of physical environment captured by an image sensor from a particular perspective.

Figure 4 is an overhead perspective view of the physical environment of Figure 3.

Figure 5A illustrates a first view of the physical environment of Figure 3 at a first time as would be seen by a left eye of a user if the user were not wearing an HMD.

Figure 5B illustrates a first image of the physical environment of Figure 3 captured by a left image sensor of the HMD at the first time.

Figure 6A illustrates a first depth plot for a central row of a first depth map of the first image of Figure 5B.

Figure 6B illustrates a first static depth plot for the central row of a first static depth map of the first image of Figure 5B.

Figure 7A illustrates a first transformed first image based on the first image of Figure 5B and the first depth plot of Figure 6A.

Figure 7B illustrates a second transformed first image based on the first image of Figure 5B and the static depth plot of Figure 6B.

Figures 8A-8C, 8E, and 8F are block diagrams of example perspective correction architectures in accordance with some implementations.

Figure 8D illustrates a block diagram of an example edge analysis engine in accordance with some implementations.

Figures 9A-9F are block diagrams of example perspective correction architectures in accordance with some implementations.

Figure 10 is a flowchart representation of a method of performing perspective correction in accordance with some implementations.

Figure 11 is a flowchart representation of another method of performing perspective correction in accordance with some implementations.

Figure 12 is a block diagram of an example controller in accordance with some implementations.

Figure 13 is a block diagram of an example electronic device in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

SUMMARY

Various implementations disclosed herein include devices, systems, and method for performing perspective correction. In various implementations, the method is performed by a device including an image sensor, a display, one or more processors, and non-transitory memory. The method includes: capturing, using the image sensor, an image of a physical environment; obtaining a first depth map including a plurality of depths respectively associated with a plurality of pixels of the image of the physical environment; generating a second depth map by aligning one or more portions of the first depth map based on a control signal associated with the image of the physical environment; transforming, using the one or more processors, the image of the physical environment based on the second depth map; and displaying, via the display, the transformed image.

Various implementations disclosed herein include devices, systems, and method for performing perspective correction. In various implementations, the method is performed by a device including an image sensor, a display, one or more processors, and non-transitory memory. The method includes: capturing, using the image sensor, an image of a physical environment; obtaining a first depth map including a plurality of depths respectively associated with a plurality of pixels of the image of the physical environment; selecting one or more portions of the first depth map based on a control signal associated with the image of the physical environment; generating a second depth map by refining the one or more portions of the first depth map; transforming, using the one or more processors, the image of the physical environment based on the second depth map; and displaying, via the display, the transformed image.

In accordance with some implementations, a device includes a display, an image sensor, one or more processors, a non-transitory memory, and one or more programs; the one or more programs are stored in the non-transitory memory and configured to be executed by the one or more processors. The one or more programs include instructions for performing or causing performance of any of the methods described herein. In accordance with some implementations, a non-transitory computer readable storage medium has stored therein instructions, which, when executed by one or more processors of a device with a display and an image sensor, cause the device to perform or cause performance of any of the methods described herein. In accordance with some implementations, a device includes: a display, an image sensor, one or more processors, a non-transitory memory, and means for performing or causing performance of any of the methods described herein.

## DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example implementations described herein.

As described above, in an HMD with a display and a scene camera, the image of the physical environment presented to the user on the display may not always reflect what the user would see if the HMD were not present due to the different positions of the eyes, the display, and the camera in space. In various circumstances, this results in poor distance perception, disorientation of the user, and poor hand-eye coordination, e.g., while interacting with the physical environment. Thus, in various implementations, images from the scene camera are transformed such that they appear to have been captured at or substantially near to the location of the user's eyes using a depth map representing, for each pixel of the image, the distance from the camera to the object represented by the pixel. In various implementations, images from the scene camera are partially transformed such that they appear to have been captured at a location closer to the location of the user's eyes than the location of the scene camera in one or more dimensions.

In various implementations, the depth map is altered to reduce artifacts. For example, in various implementations, the depth map is smoothed so as to avoid holes in the transformed image. In various implementations, the depth map is clamped so as to reduce larger movements of the pixels during the transformation. In various implementations, the depth map is temporally stable, for example, made static such that dynamic objects are substantially excluded from the depth map. For example, in various implementations, the depth map values at locations of a dynamic object are determined by interpolating the depth map using locations surrounding the locations of the dynamic object. In various implementations, the depth map values at locations of a dynamic object are determined based on depth map values determined at a time the dynamic object is not at the location. In various implementations, the depth map is determined using a three-dimensional model of the physical environment without dynamic objects. Using a static depth map (sometimes also referred to herein as a "temporally stable depth map") may increase spatial artifacts, such as the objects not being displayed at their true locations. However, using a static depth map may reduce temporal artifacts, such as flickering.

In various implementations, at least some portions of the static depth map may be further refined to improve the resultant transformed image. As one example, one or more portions of the static depth map may be regularized based on or aligned to particular luminous intensities, colors, or textures (or changes/transitions thereto) within the images from the scene camera. As another example, one or more portions of the static depth map associated with particular objects may be regularized or upscaled. As another example, one or more portions of the static depth map associated with corners or edges may be regularized or upscaled. As yet another example, one or more portions of the static depth map associated with corners or edges of particular objects may be regularized or upscaled. Similarly, in some implementations, at least some portions of a warp mesh used to transform the images from the scene camera may be further refined to improve the resultant transformed image. As such, the resultant transformed image may be improved while saving power and compute resources by refining select portions of the static depth map that are most noticeable to the user such as particular objects, edges, luminous intensity/color/texture transitions, and/or the like.

In various implementations, the depth map is refined to improve the resultant transformed image. As one example, one or more portions of the depth map may be regularized based on or aligned to particular luminous intensities, colors, or textures (or changes/transitions thereto) within the images from the scene camera. As another example, one or more portions of the depth map associated with particular objects may be regularized or upscaled. As another example, one or more portions of the depth map associated with corners or edges may be regularized or upscaled. As yet another example, one or more portions of the depth map associated with corners or edges of particular objects may be regularized or upscaled. As such, the resultant transformed image may be improved while saving power and compute resources by refining select portions of the depth map that are most noticeable to the user such as particular objects, edges, luminous intensity/color /texture transitions, and/or the like.

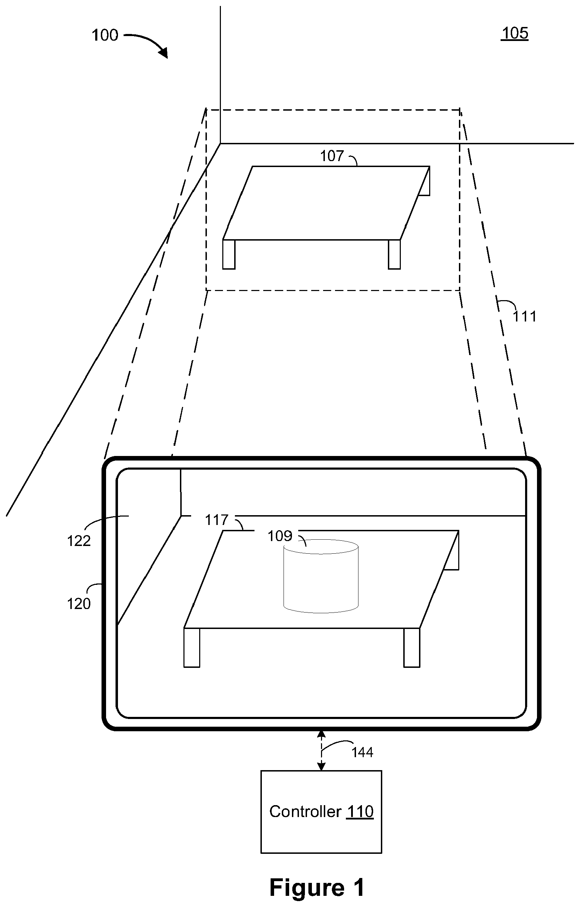

Figure 1 is a block diagram of an example operating environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100 includes a controller 110 and an electronic device 120.

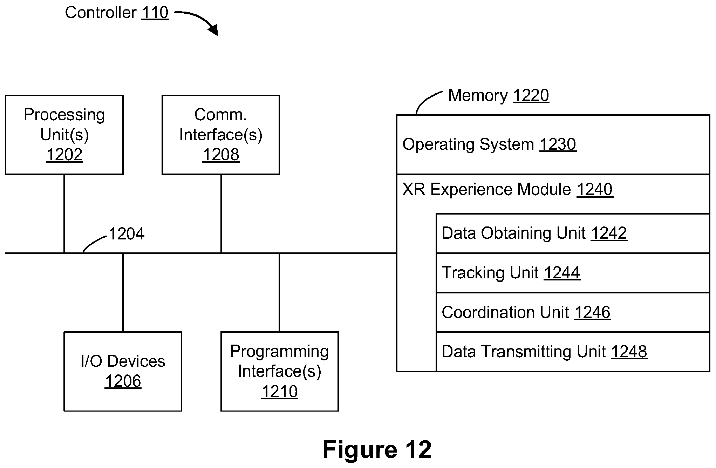

In some implementations, the controller 110 is configured to manage and coordinate an XR experience for the user. In some implementations, the controller 110 includes a suitable combination of software, firmware, and/or hardware. The controller 110 is described in greater detail below with respect to Figure 12. In some implementations, the controller 110 is a computing device that is local or remote relative to the physical environment 105. For example, the controller 110 is a local server located within the physical environment 105. In another example, the controller 110 is a remote server located outside of the physical environment 105 (e.g., a cloud server, central server, etc.). In some implementations, the controller 110 is communicatively coupled with the electronic device 120 via one or more wired or wireless communication channels 144 (e.g., BLUETOOTH, IEEE 802.11x, IEEE 802.16x, IEEE 802.3x, etc.). In another example, the controller 110 is included within the enclosure of the electronic device 120. In some implementations, the functionalities of the controller 110 are provided by and/or combined with the electronic device 120.

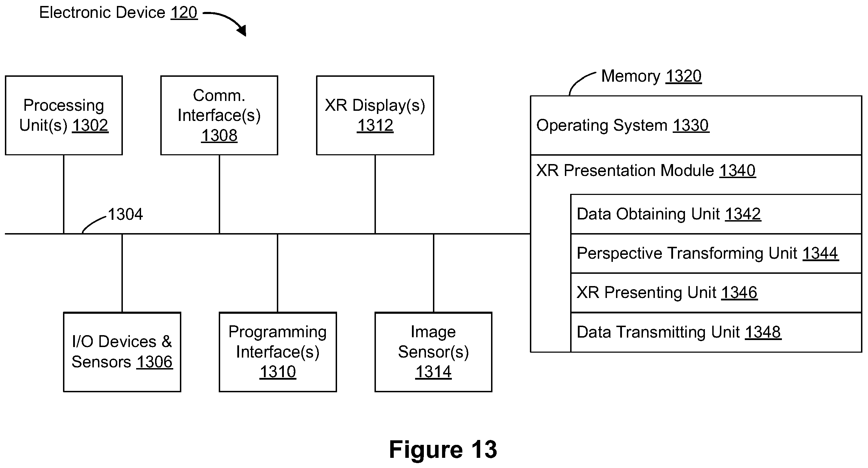

In some implementations, the electronic device 120 is configured to provide the XR experience to the user. In some implementations, the electronic device 120 includes a suitable combination of software, firmware, and/or hardware. According to some implementations, the electronic device 120 presents, via a display 122, XR content to the user while the user is physically present within the physical environment 105 that includes a table 107 within the field-of-view 111 of the electronic device 120. As such, in some implementations, the user holds the electronic device 120 in his/her hand(s). In some implementations, while providing XR content, the electronic device 120 is configured to display an XR object (e.g., an XR cylinder 109) and to enable video pass-through of the physical environment 105 (e.g., including a representation 117 of the table 107) on a display 122. The electronic device 120 is described in greater detail below with respect to Figure 13. According to some implementations, the electronic device 120 provides an XR experience to the user while the user is virtually and/or physically present within the physical environment 105.

In some implementations, the user wears the electronic device 120 on his/her head. For example, in some implementations, the electronic device 120 includes a head-mounted system (HMS), head-mounted device (HMD), or head-mounted enclosure (HME). As such, the electronic device 120 includes one or more XR displays provided to display the XR content. For example, in various implementations, the electronic device 120 encloses the field-of-view of the user. In some implementations, the electronic device 120 is a handheld device (such as a smartphone or tablet) configured to present XR content, and rather than wearing the electronic device 120, the user holds the device with a display directed towards the field-of-view of the user and a camera directed towards the physical environment 105. In some implementations, the handheld device can be placed within an enclosure that can be worn on the head of the user. In some implementations, the electronic device 120 is replaced with an XR chamber, enclosure, or room configured to present XR content in which the user does not wear or hold the electronic device 120.

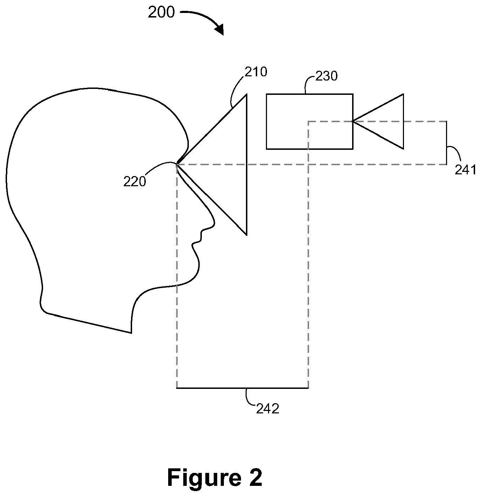

Figure 2 illustrates an example scenario 200 related to capturing an image of an environment and displaying the captured image in accordance with some implementations. A user wears a device (e.g., the electronic device 120 of Figure 1) including a display 210 and an image sensor 230. The image sensor 230 captures an image of a physical environment and the display 210 displays the image of the physical environment to the eyes 220 of the user. The image sensor 230 has a perspective that is offset vertically from the perspective of the user (e.g., where the eyes 220 of the user are located) by a vertical offset 241. Further, the perspective of the image sensor 230 is offset longitudinally from the perspective of the user by a longitudinal offset 242. Further, in various implementations, the perspective of the image sensor 230 is offset laterally from the perspective of the user by a lateral offset (e.g., into or out of the page in Figure 2).

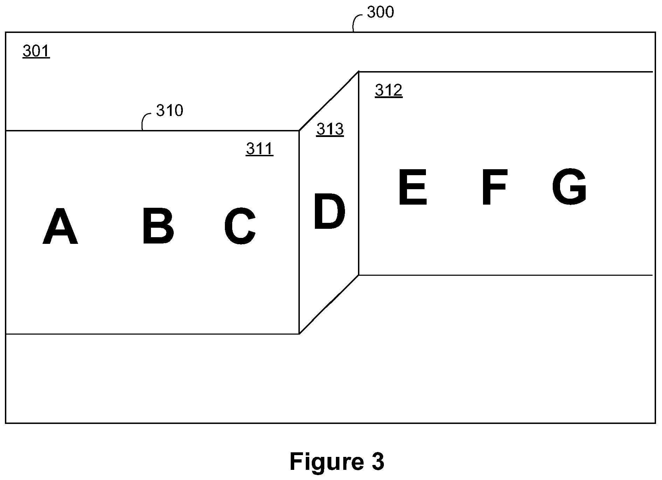

Figure 3 is an image 300 of a physical environment 301 captured by an image sensor from a particular perspective. The physical environment 301 includes a structure 310 having a first surface 311 nearer to the image sensor, a second surface 312 further from the image sensor, and a third surface 313 connecting the first surface 311 and the second surface 312. The first surface 311 has the letters A, B, and C painted thereon, the third surface 313 has the letter D painted thereon, and the second surface 312 has the letters E, F, and G painted thereon.

From the particular perspective, the image 300 includes all of the letters painted on the structure 310. However, from other perspectives, as described below, a captured image may not include all the letters painted on the structure 310.

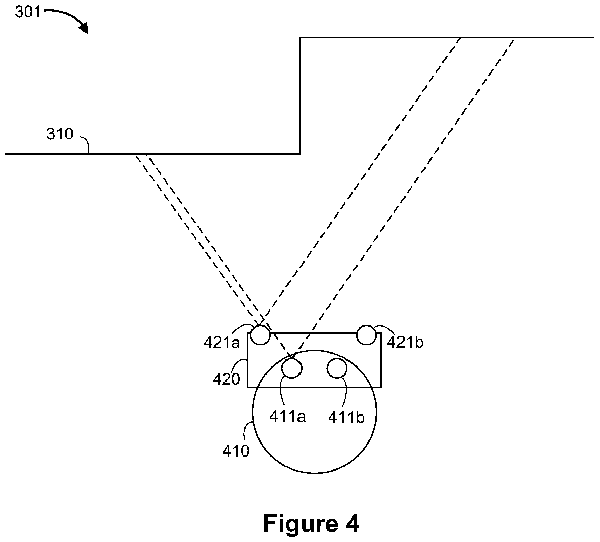

Figure 4 is an overhead perspective view of the physical environment 301 of Figure 3. The physical environment 301 includes the structure 310 and a user 410 wearing an HMD 420. The user 410 has a left eye 411a at a left eye location providing a left eye perspective. The user 410 has a right eye 411b at a right eye location providing a right eye perspective. The HMD 420 includes a left image sensor 421a at a left image sensor location providing a left image sensor perspective. The HMD 420 includes a right image sensor 421b at a right image sensor location providing a right image sensor perspective. Because the left eye 411a of the user 410 and the left image sensor 421a of the HMD 420 are at different locations, they each provide different perspectives of the physical environment.

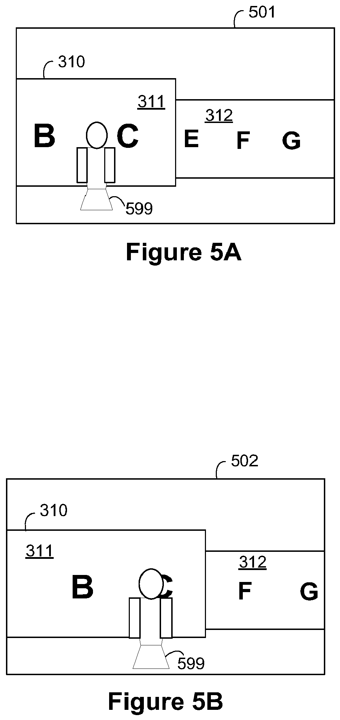

Figure 5A illustrates a first view 501 of the physical environment 301 at a first time as would be seen by the left eye 411a of the user 410 if the user 410 were not wearing the HMD 420. In the first view 501, the first surface 311 and the second surface 312 are present, but the third surface 313 is not. On the first surface 311, the letters B and C can be seen, whereas the letter A is not in the field-of-view of the left eye 411a. Similarly, on the second surface 312, the letters E, F, and G can be seen. The view 501 further includes a person 599 in front of the first surface 311 between the letters B and C.

Figure 5B illustrates a first image 502 of the physical environment 301 captured by the left image sensor 421a at the first time. In the first image 502, like the first view 501, the first surface 311 and the second surface 312 are present, but the third surface 313 is not. On the first surface 311, the letters B and C can be at least partially seen, whereas the letter A is not in the field-of-view of the left image sensor 421a. Similarly, on the second surface 312, the letters F and G can be seen, whereas the letter E is not in the field-of-view of the left image sensor 421a. Notably, in the first image 502, as compared to the first view 501, the letter E is not present on the second surface 312. Thus, the letter E is in the field-of-view of the left eye 411a, but not in the field-of-view of the left image sensor 421a. The first image 502 further includes the person 599 in front of the first surface 311 partially occluding the letter C.

In various implementations, the HMD 420 transforms the first image 502 to make it appear as though it was captured from the left eye perspective rather than the left image sensor perspective, e.g., to appear as the first view 501. In various implementations, the transformation is a projective transformation. In various implementations, the HMD 420 transforms the first image 502 based on depth values associated with first image 502 and a difference between the left image sensor perspective and the left eye perspective. In various implementations, the difference between the left image sensor perspective and the left eye perspective is determined during a calibration procedure. In various implementations, the depth value for a pixel of the first image 502 represents the distance from the left image sensor 421a to an object in the physical environment 301 represented by the pixel. In various implementations, the depth values are used to generate a depth map including a respective depth value for each pixel of the first image 502.

In various implementations, the resulting transformed image includes holes, e.g., pixel locations of the transformed image for which there is no corresponding pixel location of the first image 502. Such holes may be filled via interpolation or using additional images, such as another image from a different perspective (e.g., from the right image sensor 421b or from the left image sensor 421a at a different time).

In various implementations, the resulting transformed image includes ambiguities, e.g., pixel locations of the transformed image for where there are multiple corresponding pixel locations of the first image 502. Such ambiguities may be disambiguated using averaging or consensus algorithms.

In various implementations, the depth map excludes dynamic objects and/or includes only static objects. In various implementations, the depth map excludes movable objects and/or includes only fixed objects. In various implementations, the depth map excludes temporary objects and/or includes only permanent objects. Thus, in various implementations, the depth map excludes the person 599. For each pixel location representing the person 599 in the first image 502, the depth value is determined by ignoring the distance from the left image sensor 421a to the person 599. Rather, the depth value represents the distance from the left image sensor 421a to a static object behind the person 599. In various implementations, the depth value is determined by interpolating the depth values of pixels surrounding the pixel location representing the person 599. In various implementations, the depth value is determined based on depth values of the pixel location at a time the person 599 is not at the pixel location. In various implementations, the depth value is determined using a three-dimensional model of the physical environment 301 excluding the person 599.

For example, in various implementations, the HMD 420 generates a three-dimensional model including a three-dimensional mesh. The three-dimensional mesh includes a set of triangles that are connected by their common edges and/or vertices. Each vertex is located at a three-dimensional location in a three-dimensional coordinate system of the physical environment 301. To generate the three-dimensional model, the HMD 420 determines the three-dimensional locations of the vertices using a depth sensor, stereo matching, or any other method. However, in various implementations, a vertex is added only if it is determined that the corresponding object is a static object. For example, when using a depth sensor, a vertex may only be added if it is detected at least a threshold number of times over a time period of sufficient length. As another example, using stereo matching, a vertex may only be added if the pixels in the stereo images correspond to a static object in the images as determined via semantic segmentation. For example, in a first image of the physical environment and a second image of the physical environment, each pixel may be classified as one of a plurality of object types using a neural network. For a pixel in the first image classified as a wall or a table and a corresponding pixel in the second image similarly classified, a vertex corresponding to the pixels may be added to the three-dimensional model. For a pixel in the first image classified as a person, a hand, a dog, or a vehicle and a corresponding pixel in the second image similarly classified, a vertex corresponding to the pixels may not be added to the three-dimensional model.

Using a static depth map may increase spatial artifacts, such as the person 599 not being displayed at its true location in the physical environment 301. However, using a static depth map may reduce temporal artifacts, such as flickering or warping. Further, another advantage of generating a depth map using a three-dimensional model is that a static depth map can be rendered from any viewpoint where the room geometry is visible.

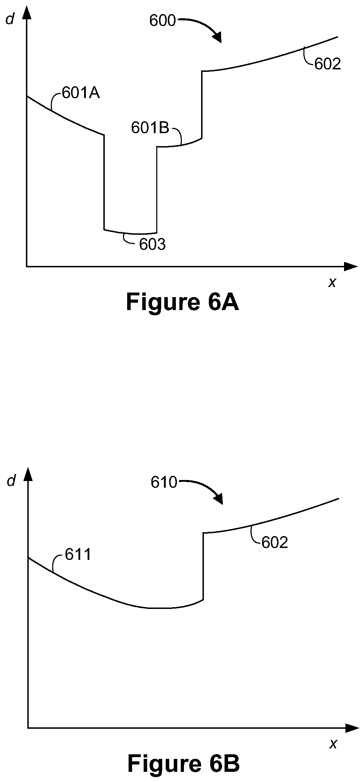

Figure 6A illustrates a first depth plot 600 for a central row of a first depth map of the first image 502. The first depth plot 600 includes a left first portion 601A corresponding to the distance between the left image sensor 421A and various points on the first surface 311 to the left of the person 599 and a right first portion 601B corresponding to the distance between the left image sensor 421A and various points on the first surface 311 to the right of the person 599. The first depth plot 600 includes a second portion 602 corresponding to the distance between the left image sensor 421A and various points on the second surface 312. The first depth plot 600 includes a third portion 603 corresponding to the distance between the left image sensor 421A and various points on the person 599.

Figure 6B illustrates a first static depth plot 610 for a central row of a first static depth map of the first image 502. In various implementations, the first static depth map is generated by rasterization of the three-dimensional model or ray tracing based on the three-dimensional model. Thus, each pixel in the static depth map indicates the distance from the left image sensor 421A to a static object in the physical environment 301 through the pixel of the first image 502 in a camera plane.

The first static depth plot 610 includes a first portion 611 corresponding to the distance between the left image sensor 421A and various points on the first surface 311 and the second portion 602 corresponding to the distance between the left image sensor 421A and various points on the second surface 312. Notably, the first static depth plot 610 does not include the third portion 603 corresponding to the distance the left image sensor 421A and various points on the person 599 because the person 599 is not a static object.

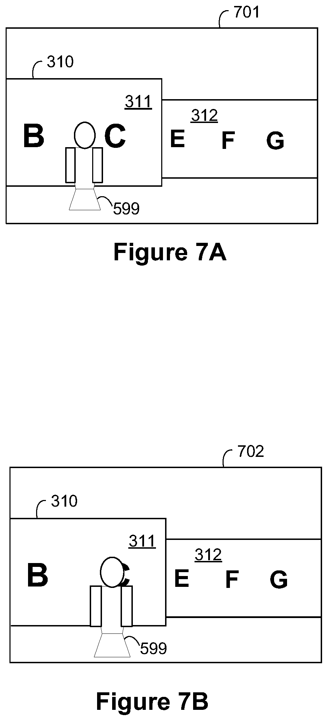

Figure 7A illustrates a first transformed first image 701 generated by transforming the first image 502 based on the first depth map of the first image 502 and the difference between the left scene camera perspective and the left eye perspective.

In the first transformed first image 701, the first surface 311 and the second surface 312 are present, but the third surface 313 is not. On the first surface 311, the letters B and C can be seen. Similarly, on the second surface 312, the letters E, F, and G can be seen. The first transformed first image 701 further includes the person 599 in front of the first surface 311 between the letters B and C. Thus, the first transformed first image 701 is substantially identical to the first view 501. Although, the left-half of the letter C and the entirety of the letter E was not seen in the first image 502, the left-half of the letter C and the entirety of the letter E is seen in the first transformed first image 701 using hole-filling using other images (rather than interpolation).

Figure 7B illustrates a second transformed first image 702 generated by transforming the first image 502 based on the first static depth map of the first image 502 and the difference between the left scene camera perspective and the left eye perspective.

In the second transformed first image 701, the first surface 311 and the second surface 312 are present, but the third surface 313 is not. On the first surface 311, the letters B and C can be at least partially seen. Similarly, on the second surface 312, the letters E, F, and G can be seen. The second transformed first image 701 further includes the person 599 in front of the first surface 311 partially occluding the letter C. Thus, whereas the first surface 311 and second surface 312 are correctly transformed, with the letters having the same sizes and positions as the first view 501, the person 599 is not between the letters B and C (as in the first view 501), but partially occluding the letter C (as in the first image 502). Transforming based on the first static depth map treats the person 599 as though the person 599 were at the depth of the first surface 311 (e.g., painted on the first surface 311) rather than in front of the first surface 311. Thus, the portion of the first image 502 corresponding to the person 599 is mapped to the same location as the portion of the first image corresponding to the letter C. Although the letter E was not seen in the first image 502, the letter E is seen in the second transformed first image 702 using hole-filling using other images (rather than interpolation).

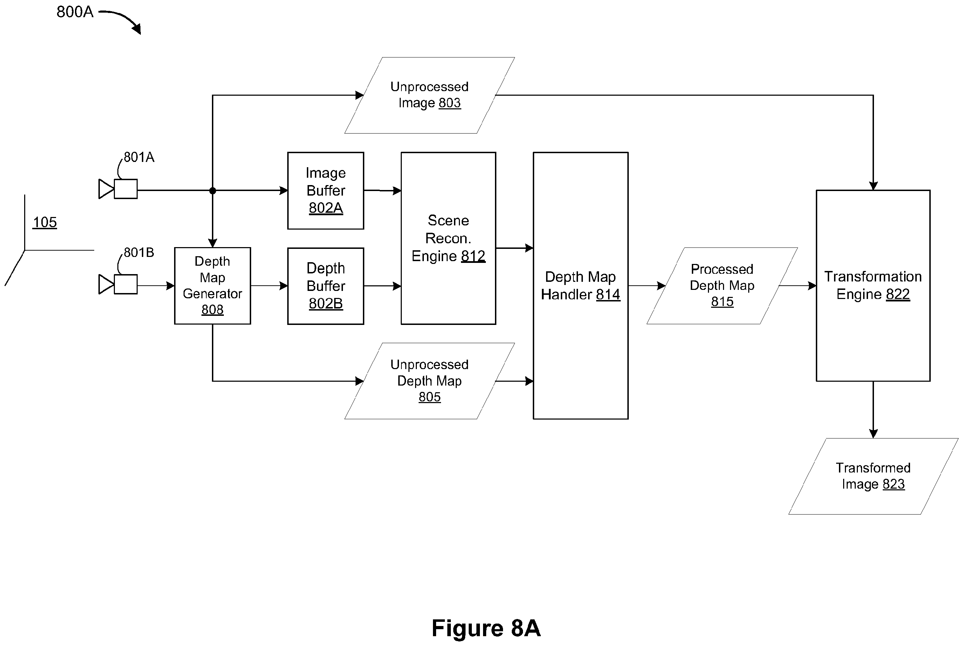

Figures 8A illustrates a block diagram of an example perspective correction architecture 800A in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the controller 110 in Figures 1 and 12, the electronic device 120 in Figures 1 and 13, or a suitable combination thereof includes the perspective correction architecture 800A or provides the functionality thereof.

As shown in Figure 8A, an image sensor 801A captures an unprocessed image 803 associated with the physical environment 105, and a depth sensor 801B captures depth values associated with the physical environment 105, which are used by a depth map generator 808 to generate an unprocessed depth map 805 including a respective depth value for each pixel in the unprocessed image 803.

In Figure 8A, the image buffer 802A stores a plurality of unprocessed images captured by the image sensor 801A at plurality of different times and across a plurality of different spatial perspectives of the physical environment 105. Likewise, the depth buffer 802B stores a plurality of unprocessed depth maps from a plurality of different times and across a plurality of different spatial perspectives of the physical environment 105.

As shown in Figure 8A, a scene reconstruction engine 812 generates a three-dimensional model of the physical environment 105 based on the image buffer 802A and the depth buffer 802B. As noted above, the three-dimensional model may correspond to a three-dimensional mesh.

In various implementations, generating the three-dimensional model includes adding one or more points to the three-dimensional model at one or more location in a three-dimensional coordinate system of the physical environment 105 corresponding to one or more static objects in the physical environment 105. In various implementations, the one or more points are vertices of triangles of a mesh. In various implementations, adding the one or more points to the three-dimensional model includes (and/or is performed in response to) determining that the one or more points correspond to the one or more static objects in the physical environment.

In various implementations, determining that a particular one of the one or more points corresponds to the one or more static objects includes performing semantic segmentation on one or more images. For example, a pixel classified as a table or a wall could form part of a keypoint pair in stereo matching to generate a point to be added to the three-dimensional model, whereas a pixel classified as a person or a vehicle would be excluded from forming part of a keypoint pair in stereo matching to generate a point to be added to the three-dimensional model. In various implementations, determining that a particular one of the one or more points corresponds to the one or more static objects includes detecting the particular point at a same location at least a threshold number of times over a time period. For example, if a feature is detected at the same location in the physical environment in two or more subsequent minutes or seconds, a point determined to correspond to a static object is added at that location. In various implementations, determining that a particular one of the one or more points corresponds to the one or more static objects includes determining that surrounding points correspond to the one or more static objects. For example, if points of a wall are detected in three non-linear co-planar locations, points on the defined plane between the points can be determined as points corresponding to the one or more static objects.

Thus, in various implementations, the three-dimensional model is based on historical data obtained at one or more times before the unprocessed image 803 of the physical environment 105 was captured. For example, the three-dimensional model may be based on data obtained a second, a few seconds, a minute, a few minutes, an hour, a day, or any other time before the unprocessed image 803 of the physical environment 105 was captured.

In Figure 8A, a depth map handler 814 generates a processed depth map 815 based on the three-dimensional model of the physical environment 105 generated by the scene reconstruction engine 812 and optionally the unprocessed depth map 805. In some implementations, the depth map handler 814 smooths the processed depth map 815 so as to avoid holes in the transformed image 823. In various implementations, the depth map handler 814 clamps objects (e.g., depth map values) within the processed depth map 815 to a maximum depth so as to reduce larger movements of the pixels during the transformation.

In various implementations, the depth map handler 814 also makes the processed depth map 815 static (e.g., based on the three-dimensional model of the physical environment 105) such that dynamic objects are substantially excluded from the processed depth map 815. For example, in various implementations, the depth map values associated with the processed depth map 815 at locations of a dynamic object are determined by interpolating the processed depth map 815 using locations surrounding the locations of the dynamic object. In various implementations, the depth map values associated with the processed depth map 815 at locations of a dynamic object are determined based on depth map values determined at a time the dynamic object is not at the location (e.g., based on the depth buffer 802B or the three-dimensional model of the physical environment 105). In various implementations, at least some depth map values associated with the processed depth map 815 are determined using a three-dimensional model of the physical environment 105 without dynamic objects.

In various implementations, the processed depth map 815 includes a dense depth map which represents, for each pixel of the image, an estimated distance between the image sensor 801A and a static object represented by the pixel or behind a dynamic object represented by the pixel. In various implementations, the processed depth map 815 includes a sparse depth map which represents, for each of a subset of the pixels of the image, an estimated distance between the image sensor 801A and a static object represented by the pixel or behind a dynamic object represented by the pixel. In various implementations, the perspective correction architecture 800A generates a sparse depth map from a dense depth map by sampling the dense depth map, e.g., selecting a single pixel in every $N \times N$ block of pixels.

In various implementations, the perspective correction architecture 800A obtains at least one of the plurality of depth map values associated with the processed depth map 815 from the depth sensor 801B. In various implementations, the perspective correction architecture 800A obtains at least one of the plurality of depth map values associated with the processed depth map 815 using stereo matching, for example, using the image of the physical environment as captured by the left scene camera 421a in Figure 4 and another image of the physical environment captured by a right scene camera 421b in Figure 4. In various implementations, the perspective correction architecture 800A obtains at least one of the plurality of depth map values associated with the processed depth map 815 through eye tracking, e.g., the intersection of the gaze directions of the two eyes of the user indicates the depth of an object at which the user is looking. In various implementations, as discussed further herein, the perspective correction architecture 800A obtains at least one of the plurality of depth map values associated with the processed depth map 815 based on a three-dimensional model of the physical environment excluding dynamic objects.

As shown in Figure 8A, the transformation engine 822 transforms the unprocessed image 803 based on the processed depth map 815 such that the resultant transformed image 823 appears to have been captured at or substantially near to the location of the user's eye. In some implementations, the transformed image 823 may be composited with rendered content/graphics before being displayed to the user.

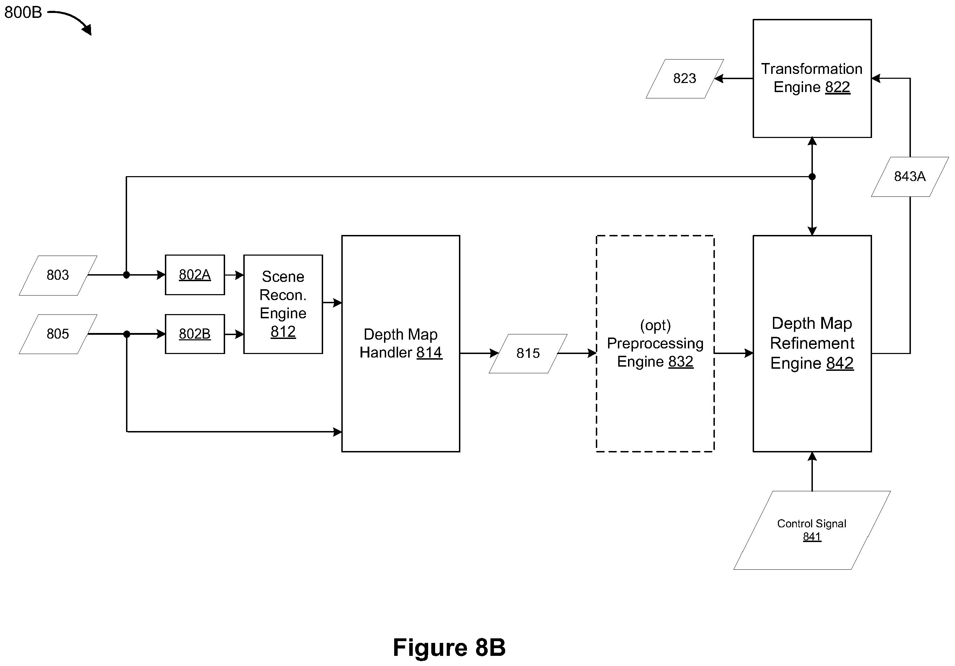

Figure 8B is a block diagram of an example perspective correction architecture 800B in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 800B in Figure 8B is similar to and adapted from the perspective correction architecture 800A in Figure 8A. To that end, similar reference numbers are used in Figures 8A and 8B and only the differences therebetween will be discussed for the sake of brevity.

As shown in Figure 8B, the depth map refinement engine 842 generates a refined depth map 843A by refining and/or regularizing one or more portions of the processed depth map 815 based on a control signal 841 and the unprocessed image 803. For example, the depth map refinement engine 842 increases the level of detail and/or resolution of the one or more portions of the processed depth map 815 based on a control signal 841 and the unprocessed image 803.

According to some implementations, the control signal 841 may instruct the depth map refinement engine 842 to align one or more portions of the processed depth map 815 based on particular luminous intensities (or a change/transition thereto) within the unprocessed image 803. According to some implementations, the control signal 841 may instruct the depth map refinement engine 842 to align one or more portions of the processed depth map 815 based on particular colors (or a change/transition thereto) within the unprocessed image 803. According to some implementations, the control signal 841 may instruct the depth map refinement engine 842 to align one or more portions of the processed depth map 815 based on particular textures (or a change/transition thereto) within the unprocessed image 803. As one example, the one or more portions of the of the processed depth map 815 may correspond to one or more corners and/or edges within the unprocessed image 803. As another example, the one or more portions of the of the processed depth map 815 may correspond to one or more particular objects within the unprocessed image 803. As yet another example, the one or more portions of the of the processed depth map 815 may correspond to one or more corners and/or edges of one or more particular objects within the unprocessed image 803.

According to some implementations, the control signal 841 may instruct the depth map refinement engine 842 to regularize one or more portions of the processed depth map 815 associated with corners and/or edges within the unprocessed image 803. According to some implementations, the control signal 841 may instruct the depth map refinement engine 842 to regularize one or more portions of the processed depth map 815 associated with particular objects within the unprocessed image 803. According to some implementations, the control signal 841 may instruct the depth map refinement engine 842 to regularize one or more portions of the processed depth map 815 associated with corners and/or edges of particular of objects within the unprocessed image 803.

In some implementations, the depth map refinement engine 842 may dynamically switch between refinement types based on an updated control signal or the like. For example, the depth map refinement engine 842 may transition from refining one or more portions of the processed depth map by aligning based on textures (e.g., with a first guided filter or joint bilateral filter) in the unprocessed image to refining one or more portions of the processed depth map by aligning based on colors (e.g., with a second guided filter or joint bilateral filter) in the unprocessed image. As another example, the depth map refinement engine 842 may transition from refining one or more portions of the processed depth map by aligning based on colors to semantic refinement or edge refinement when a particular object is detected (e.g., a monitor, a TV, a phone, a laptop, or the like).

In some implementations, the depth map refinement engine 842 corresponds to a guided filter, a joint bilateral filter, a machine learning module, or the like. For example, the machine learning module corresponds to a neural network, convolutional neural network, deep neural network, recurrent neural network, state vector machine, or the like.

In various implementations, the optional pre-processing engine 832 performs one or more pre-processing operations on the processed depth map 815 before the above-mentioned operations by the depth map refinement engine 842 such as smoothing, clamping, and/or the like.

As shown in Figure 8B, the transformation engine 822 transforms the unprocessed image 803 based on the refined depth map 843A such that the resultant transformed image 823 appears to have been captured at or substantially near to the location of the user's eye. In some implementations, the transformed image 823 may be composited with rendered content/graphics before being displayed to the user.

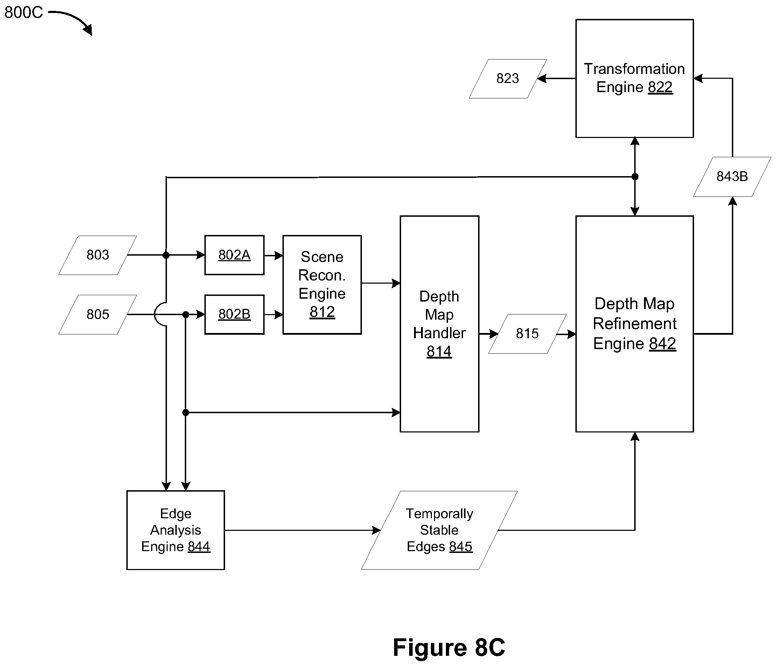

Figure 8C is a block diagram of an example perspective correction architecture 800C in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 800C in Figure 8C is similar to and adapted from the perspective correction architecture 800A in Figure 8A and the perspective correction architecture 800B in Figure 8B. To that end, similar reference numbers are used in Figures 8A, 8B, and 8C and only the differences therebetween will be discussed for the sake of brevity.

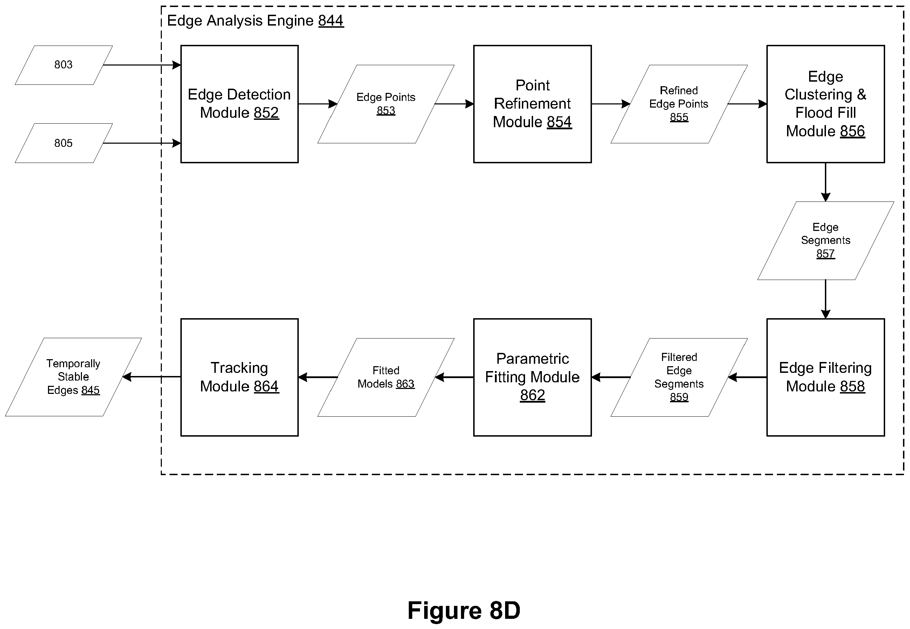

As shown in Figure 8C, an edge analysis engine 844 determines temporally stable edges 845 associated with the physical environment 105 based on the unprocessed image 803 and the unprocessed depth map 805. The edge analysis engine 844 is described in more detail with respect to Figure 8D.

Figure 8D is a block diagram of the edge analysis engine 844 in accordance with some implementations. As shown in Figure 8D, an edge detection module 852 generates edge points 853 (e.g., three-dimensional coordinates relative to the physical environment 105) for edges within the physical environment 105 based on the unprocessed image 803 and the unprocessed depth map 805. A point refinement module 854 generates refined edge points 855 (e.g., refined three-dimensional coordinates relative to the physical environment 105) based on the edge points 853 by using a stereo snake algorithm, for example, relative to images from the left image sensor 421a in Figure 4 and the right image sensor 421b in Figure 4. An edge clustering and flood fill module 856 generates edge segments 857 based on the refined edge points 855. An edge filtering module 858 generates filtered edge segments 859 by discarding at least some of the edge segments 857 based on one or more filters and/or visibility metrics. A parametric fitting module 862 generates fitted models 863 for each of the filtered edge segments 859 using a parametric fitting technique. A tracking module 864 generates temporally stable edges 845 by tracking the fitted models 863 across time and also across spatial changes to the perspective of the physical environment 105 and/or spatial changes to objects within the physical environment 105. One of ordinary skill in the art will appreciate that the edge analysis engine 844 illustrated in Figure 8D is an example that may be changed in myriad way such as removing or replacing the tracking module 864, the edge filtering module 858, and/or the point refinement module 854 in various other implementations.

As shown in Figure 8C, the depth map refinement engine 842 generates a refined depth map 843B by regularizing one or more portions of the processed depth map 815 that correspond to the temporally stable edge 845. In various implementations, the depth map refinement engine 842 upscales one or more portions of the processed depth map 815 associated with the temporally stable edge 845 based on the unprocessed image 803 and the unprocessed depth map 805.

According to some implementations, the depth map refinement engine 842 aligns the one or more portions of the processed depth map 815 that are not associated with the temporally stable edge 845 based on luminous intensity, color, texture, etc. associated with the unprocessed image 803 (e.g., with a joint bilateral filter).

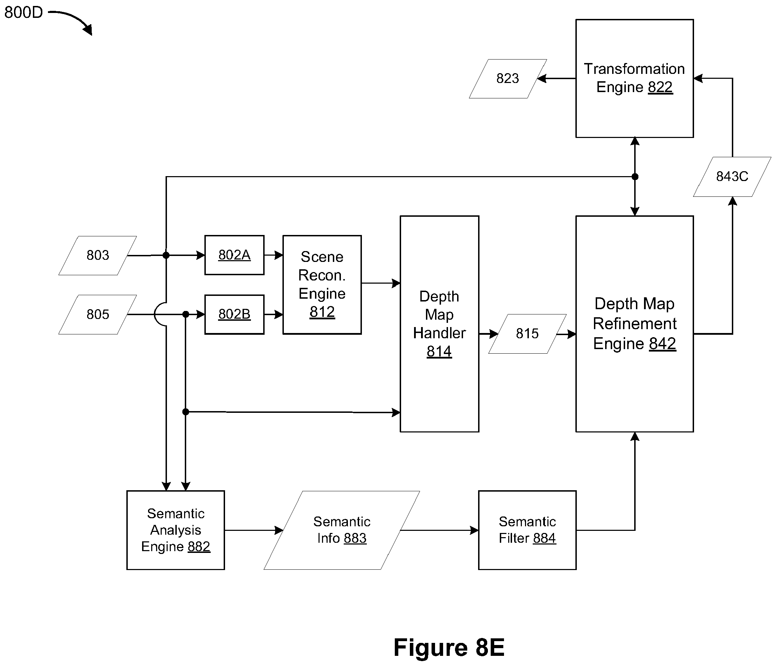

According to some implementations, the depth map refinement engine 842 may be removed, and, instead, the transformation engine may include a warp mesh refinement sub-engine that refines at least some portions of a warp mesh used to transform the unprocessed image 803 based on the temporally stable edges 845 to improve the transformed image 823. One of ordinary skill in the art will appreciate that the correction architecture 800D described below with reference to Figure 8E may similarly be modified to refine at least some portions of the warp mesh used to transform the unprocessed image 803 based on filtered pixel masks from the semantic filter 884 to improve the transformed image 823.

As shown in Figure 8C, the transformation engine 822 transforms the unprocessed image 803 based on the refined depth map 843B such that the resultant transformed image 823 appears to have been captured at or substantially near to the location of the user's eye. In some implementations, the transformed image 823 may be composited with rendered content/graphics before being displayed to the user.

Figure 8E is a block diagram of an example perspective correction architecture 800D in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 800D in Figure 8E is similar to and adapted from the perspective correction architecture 800A in Figure 8A and the perspective correction architecture 800B in Figure 8B. To that end, similar reference numbers are used in Figures 8A, 8B, and 8E and only the differences therebetween will be discussed for the sake of brevity.

As shown in Figure 8E, a semantic analysis engine 882 determines semantic information 883 associated within the physical environment 105 based on the unprocessed image 803 and the unprocessed depth map 805. According to some implementations, the semantic analysis engine 882 performs semantic segmentation. In some implementations, the semantic analysis engine 882 includes a semantic classifier or machine learning module trained for semantic isolation and identification of objects. In various implementations, the semantic information 883 includes a semantic label and a pixel mask for each object identified within the physical environment 105.

A semantic filter 884 discards semantic information 883 associated with unwanted objects. As such, the depth map refinement engine 842 generates a refined depth map 843C by regularizing one or more portions of the processed depth map 815 that correspond to particular objects (e.g., filtered pixel masks). In various implementations, the depth map refinement engine 842 upscales one or more portions of the processed depth map 815 associated with the particular objects based on the unprocessed image 803 and the unprocessed depth map 805.

According to some implementations, the depth map refinement engine 842 aligns the one or more portions of the processed depth map 815 that are not associated with the particular objects based on luminous intensity, color, texture, etc. associated with the unprocessed image 803 (e.g., with a joint bilateral filter).

As shown in Figure 8E, the transformation engine 822 transforms the unprocessed image 803 based on the refined depth map 843C such that the resultant transformed image 823 appears to have been captured at or substantially near to the location of the user's eye. In some implementations, the transformed image 823 may be composited with rendered content/graphics before being displayed to the user.

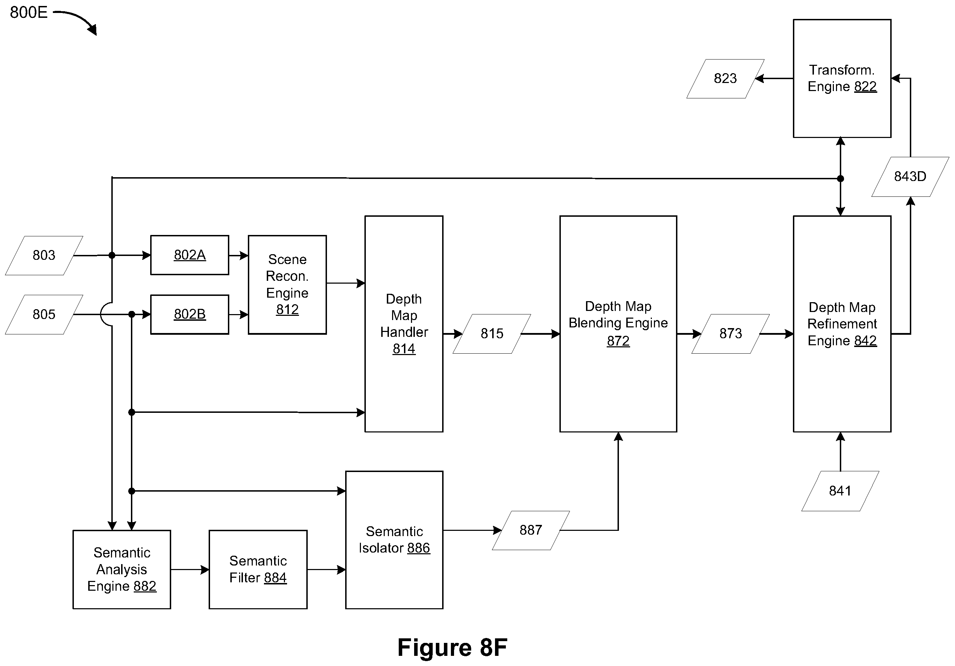

Figure 8F is a block diagram of an example perspective correction architecture 800E in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 800E in Figure 8F is similar to and adapted from the perspective correction architecture 800A in Figure 8A, the perspective correction architecture 800B in Figure 8B, and the perspective correction architecture 800D in Figure 8E. To that end, similar reference numbers are used in Figures 8A, 8B, 8E, and 8F and only the differences therebetween will be discussed for the sake of brevity.

As shown in Figure 8F, a semantic isolator 886 generates a semantically isolated depth map 887 that isolates particular objects within the unprocessed depth map 805 based on the filtered pixel masks from the semantic filter 884. As such, the semantic isolator 886 isolates portions of the unprocessed depth map 805 based on the filtered pixel masks from the semantic filter 884. Continuing with Figure 8F, a depth map blending engine 872 generates a blended depth map 873 by blending the semantically isolated depth map 887 with the processed depth map 815. In some implementations, when conflicts occur between the semantically isolated depth map 887 and the processed depth map 815, the depth map blending engine 872 uses depth map values from the semantically isolated depth map 887. The depth map refinement engine 842 generates a refined depth map 843D by refining the blended depth map 873 based on the control signal 841.

According to some implementations, the control signal 841 may instruct the depth map refinement engine 842 to align one or more portions of the blended depth map 873 based on particular luminous intensities (or a change/transition thereto) within the unprocessed image 803. According to some implementations, the control signal 841 may instruct the depth map refinement engine 842 to align one or more portions of the blended depth map 873 based on particular colors (or a change/transition thereto) within the unprocessed image 803. According to some implementations, the control signal 841 may instruct the depth map refinement engine 842 to align one or more portions of the blended depth map 873 based on particular textures (or a change/transition thereto) within the unprocessed image 803.

As shown in Figure 8F, the transformation engine 822 transforms the unprocessed image 803 based on the refined depth map 843D such that the resultant transformed image 823 appears to have been captured at or substantially near to the location of the user's eye. In some implementations, the transformed image 823 may be composited with rendered content/graphics before being displayed to the user.

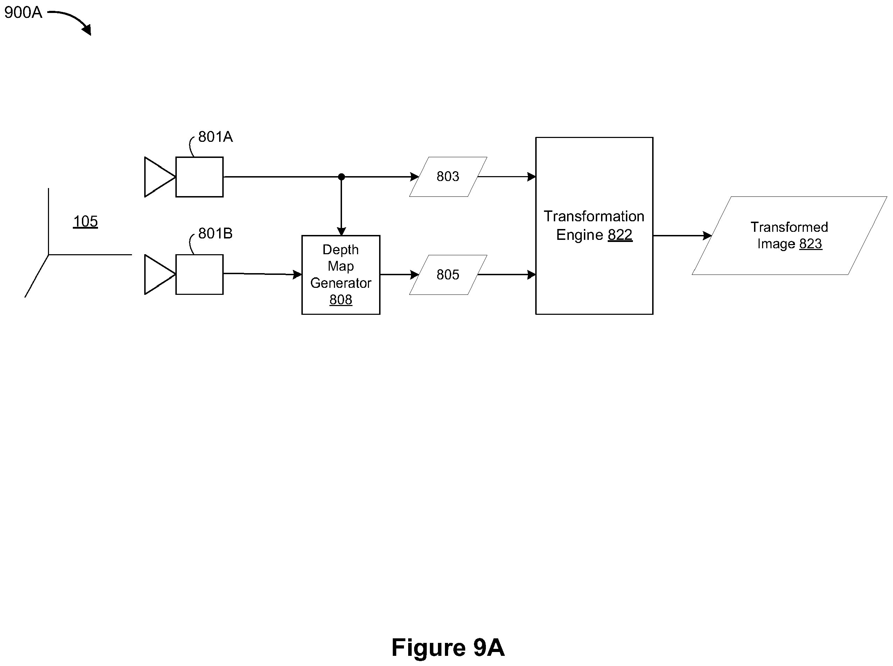

Figure 9A is a block diagram of an example perspective correction architecture 900A in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 900A in Figure 9A is similar to and adapted from the perspective correction architecture 800A in Figure 8A. To that end, similar reference numbers are used in Figures 8A and 9A.

As shown in Figure 9A, the transformation engine 822 transforms the unprocessed image 803 based on the unprocessed depth map 805 such that the resultant transformed image 823 appears to have been captured at or substantially near to the location of the user's eye. In some implementations, the transformed image 823 may be composited with rendered content/graphics before being displayed to the user.

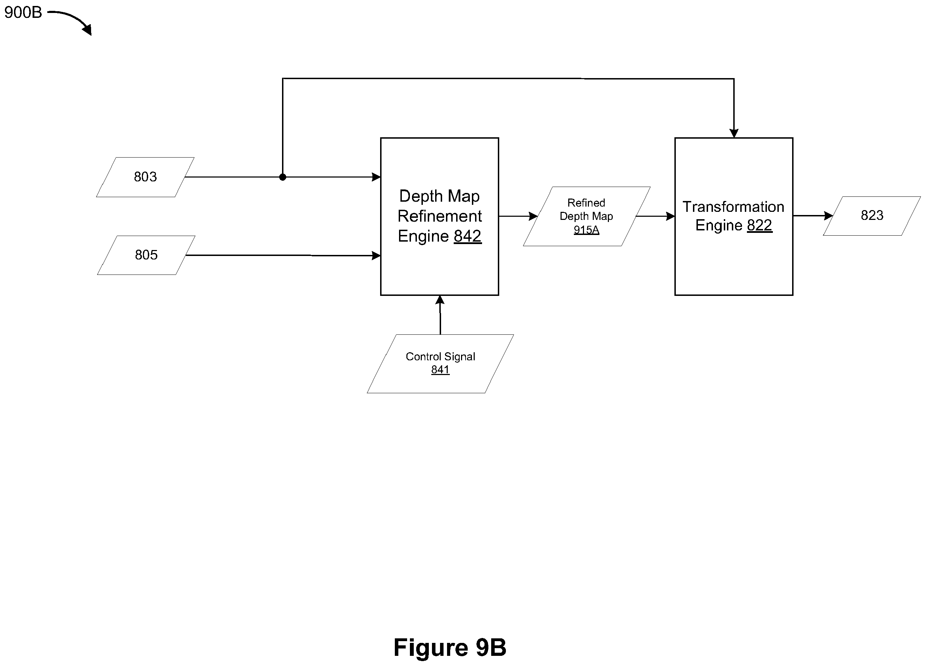

Figure 9B is a block diagram of an example perspective correction architecture 900B in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 900B in Figure 9B is similar to and adapted from the perspective correction architecture 800B in Figure 8B and the perspective correction architecture 900A in Figure 9A. To that end, similar reference numbers are used in Figures 9A and 9B and only the differences therebetween will be discussed for the sake of brevity.

As shown in Figure 9B, the depth map refinement engine 842 generates a refined depth map 915A by refining and/or regularizing one or more portions of the unprocessed depth map 805 based on a control signal 841 and the unprocessed image 803. According to some implementations, the control signal 841 may instruct the depth map refinement engine 842 to align one or more portions of the unprocessed depth map 805 based on particular luminous intensities (or a change/transition thereto) within the unprocessed image 803. According to some implementations, the control signal 841 may instruct the depth map refinement engine 842 to align one or more portions of the unprocessed depth map 805 based on particular colors (or a change/transition thereto) within the unprocessed image 803. According to some implementations, the control signal 841 may instruct the depth map refinement engine 842 to align one or more portions of the unprocessed depth map 805 based on particular textures (or a change/transition thereto) within the unprocessed image 803.

As one example, the one or more portions of the of the unprocessed depth map 805 may correspond to one or more corners and/or edges within the unprocessed image 803. As another example, the one or more portions of the of the unprocessed depth map 805 may correspond to one or more particular objects within the unprocessed image 803. As yet another example, the one or more portions of the of the unprocessed depth map 805 may correspond to one or more corners and/or edges of one or more particular objects within the unprocessed image 803.

According to some implementations, the control signal 841 may instruct the depth map refinement engine 842 to regularize one or more portions of the unprocessed depth map 805 associated with corners and/or edges within the unprocessed image 803. According to some implementations, the control signal 841 may instruct the depth map refinement engine 842 to regularize one or more portions of the unprocessed depth map 805 associated with particular objects within the unprocessed image 803. According to some implementations, the control signal 841 may instruct the depth map refinement engine 842 to regularize one or more portions of the unprocessed depth map 805 associated with corners and/or edges of particular of objects within the unprocessed image 803.

In some implementations, the depth map refinement engine 842 corresponds to a guided filter, a joint bilateral filter, a machine learning module, or the like. For example, the machine learning module corresponds to a neural network, convolutional neural network, deep neural network, recurrent neural network, state vector machine, or the like.

As shown in Figure 9B, the transformation engine 822 transforms the unprocessed image 803 based on the refined depth map 915A such that the resultant transformed image 823 appears to have been captured at or substantially near to the location of the user's eye. In some implementations, the transformed image 823 may be composited with rendered content/graphics before being displayed to the user.

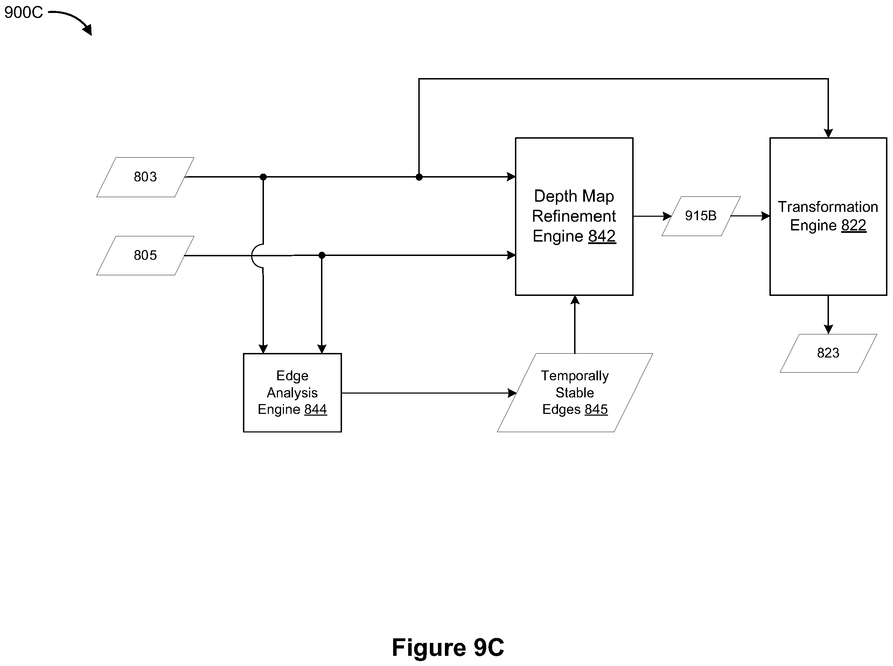

Figure 9C is a block diagram of an example perspective correction architecture 900C in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 900C in Figure 9C is similar to and adapted from the perspective correction architecture 800C in Figure 8C and the perspective correction architecture 900B in Figure 9B. To that end, similar reference numbers are used in Figures 8C, 9B, and 9C and only the differences therebetween will be discussed for the sake of brevity.

As shown in Figure 9C, the edge analysis engine 844 determines temporally stable edges 845 associated with the physical environment 105 based on the unprocessed image 803 and the unprocessed depth map 805. The edge analysis engine 844 is described in more detail above with respect to Figure 8D.

As shown in Figure 9C, the depth map refinement engine 842 generates a refined depth map 915B by regularizing one or more portions of the unprocessed depth map 805 that correspond to the temporally stable edge 845. In various implementations, the depth map refinement engine 842 upscales one or more portions of the unprocessed depth map 805 associated with the temporally stable edge 845 based on the unprocessed image 803 and the unprocessed depth map 805.

As shown in Figure 9C, the transformation engine 822 transforms the unprocessed image 803 based on the refined depth map 915B such that the resultant transformed image 823 appears to have been captured at or substantially near to the location of the user's eye. In some implementations, the transformed image 823 may be composited with rendered content/graphics before being displayed to the user.

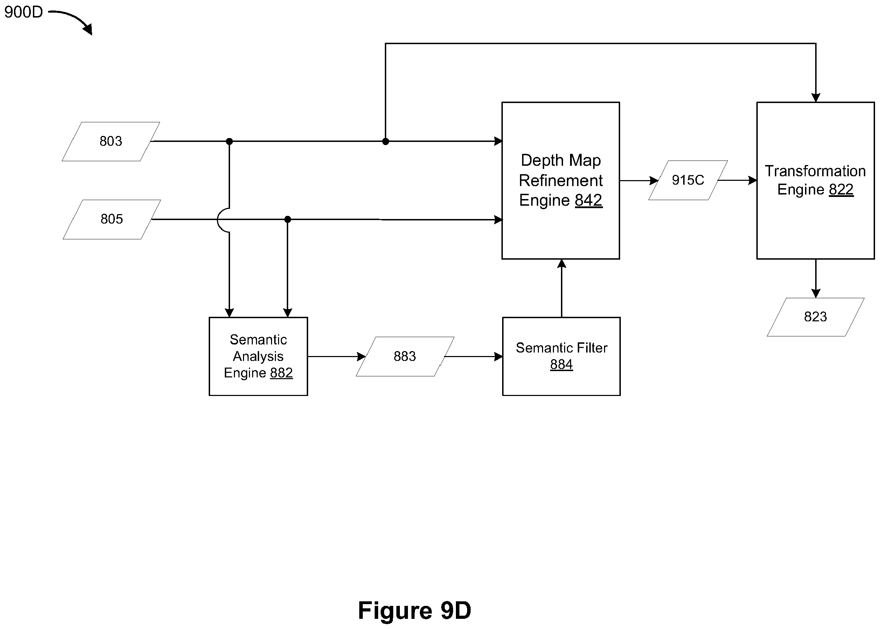

Figure 9D is a block diagram of an example perspective correction architecture 900D in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 900D in Figure 9D is similar to and adapted from the perspective correction architecture 800D in Figure 8E and the perspective correction architecture 900B in Figure 9B. To that end, similar reference numbers are used in Figures 8E, 9B, and 9D and only the differences therebetween will be discussed for the sake of brevity.

As shown in Figure 9D, a semantic analysis engine 882 determines semantic information 883 associated within the physical environment 105 based on the unprocessed image 803 and the unprocessed depth map 805. According to some implementations, the semantic analysis engine 882 performs semantic segmentation. In some implementations, the semantic analysis engine 882 includes a semantic classifier or machine learning module trained for semantic identification of objects. In various implementations, the semantic information 883 includes a semantic label and a pixel mask for each object identified within the physical environment 105.

A semantic filter 884 discards semantic information 883 associated with unwanted objects. As such, the depth map refinement engine 842 generates a refined depth map 915C by regularizing one or more portions of the unprocessed depth map 805 that correspond to particular objects. In various implementations, the depth map refinement engine 842 upscales one or more portions of the unprocessed depth map 805 associated with the particular objects based on the unprocessed image 803 and the unprocessed depth map 805.

As shown in Figure 9D, the transformation engine 822 transforms the unprocessed image 803 based on the refined depth map 915C such that the resultant transformed image 823 appears to have been captured at or substantially near to the location of the user's eye. In some implementations, the transformed image 823 may be composited with rendered content/graphics before being displayed to the user.

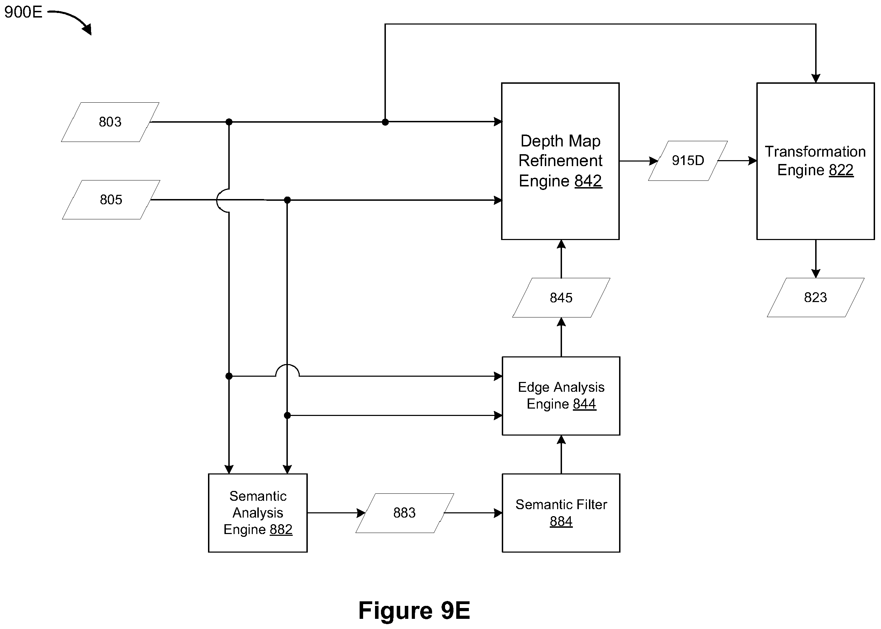

Figure 9E is a block diagram of an example perspective correction architecture 900E in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 900E in Figure 9E is similar to and adapted from the perspective correction architecture 900C in Figure 9C and the perspective correction architecture 900D in Figure 9D. To that end, similar reference numbers are used in Figures 9C-9E and only the differences therebetween will be discussed for the sake of brevity.

As shown in Figure 9E, the semantic filter 884 discards semantic information 883 associated with unwanted objects. As such, the edge analysis engine 844 determines temporally stable edges 845 associated with particular objects within the physical environment 105 based on the unprocessed image 803 and the unprocessed depth map 805. The edge analysis engine 844 is described in more detail above with respect to Figure 8D.

As shown in Figure 9E, the depth map refinement engine 842 generates a refined depth map 915D by regularizing one or more portions of the unprocessed depth map 805 that correspond to the temporally stable edges 845 of the particular objects. In various implementations, the depth map refinement engine 842 upscales one or more portions of the unprocessed depth map 805 associated with the temporally stable edge 845 of particular objects based on the unprocessed image 803 and the unprocessed depth map 805.

As shown in Figure 9E, the transformation engine 822 transforms the unprocessed image 803 based on the refined depth map 915D such that the resultant transformed image 823 appears to have been captured at or substantially near to the location of the user's eye. In some implementations, the transformed image 823 may be composited with rendered content/graphics before being displayed to the user.

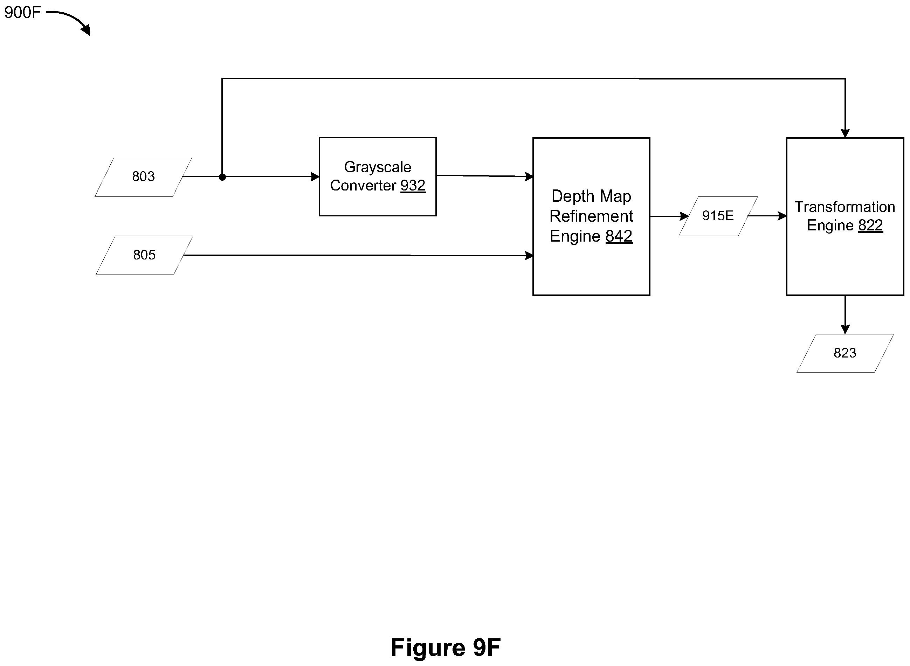

Figure 9F is a block diagram of an example perspective correction architecture 900F in accordance with some implementations. While certain specific features are illustrated, those skilled in the art will appreciate from the present disclosure that various other features have not been illustrated for the sake of brevity, and so as not to obscure more pertinent aspects of the implementations disclosed herein. According to some implementations, the perspective correction architecture 900F in Figure 9G is similar to and adapted from the perspective correction architecture 900B in Figure 9B. To that end, similar reference numbers are used in Figures 9B and 9F and only the differences therebetween will be discussed for the sake of brevity.

As shown in Figure 9F, a grayscale converter 932 converts the unprocessed image 803 into a grayscale image. In Figure 9F, the depth map refinement engine 842 generates a refined depth map 915E by regularizing one or more portions of the unprocessed depth map 805 based on luminous intensity values or a transition thereto in the grayscale image.

As shown in Figure 9F, the transformation engine 822 transforms the unprocessed image 803 based on the refined depth map 915E such that the resultant transformed image 823 appears to have been captured at or substantially near to the location of the user's eye. In some implementations, the transformed image 823 may be composited with rendered content/graphics before being displayed to the user.

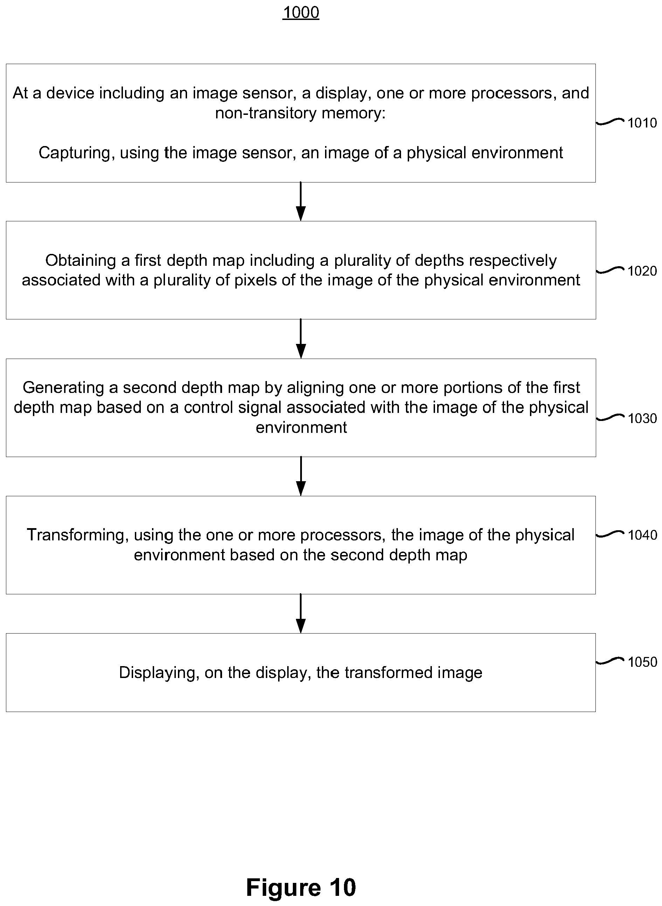

Figure 10 is a flowchart representation of a method of performing perspective correction of an image in accordance with some implementations. In various implementations, the method 1000 is performed by a device with an image sensor, a display, one or more processors, and non-transitory memory (e.g., the electronic device 100 in Figures 1 and 13, the controller 110 in Figures 1 and 12, or a combination thereof). In some implementations, the method 1000 is performed by processing logic, including hardware, firmware, software, or a combination thereof. In some implementations, the method 1000 is performed by a processor executing instructions (e.g., code) stored in a non-transitory computer-readable medium (e.g., a memory).

The method 1000 begins, in block 1010, with the device capturing, using the image sensor, an image of a physical environment.

The method 1000 continues, in block 1020, with the device obtaining a first depth map including a plurality of depths respectively associated with a plurality of pixels of the image of the physical environment.

In some implementations, the first depth map includes, for a particular pixel at a particular pixel location representing a dynamic object in the physical environment, a particular depth corresponding to a distance between the image sensor and a static object in the physical environment behind the dynamic object. In some implementations, obtaining the first depth map includes determining the particular depth via interpolation using depths of locations surrounding the particular pixel location. In some implementations, obtaining the first depth map includes determining the particular depth at a time the dynamic object was not represented at the particular pixel location. In some implementations, obtaining the first depth map includes determining the particular depth based on a three-dimensional model of the physical environment. In some implementations, the three-dimensional model of the physical environment corresponds to a temporally stable three-dimensional model of the physical environment. In some implementations, the three-dimensional model of the physical environment excludes dynamic objects. In various implementations, determining the particular depth based on a three-dimensional model includes rasterizing the three-dimensional model. In various implementations, determining the particular depth based on the three-dimensional model includes ray tracing based on the three-dimensional model.

In some implementations, the first depth map corresponds to a temporally stable depth map including a plurality of depths respectively associated with a plurality of pixels of the image of the physical environment, wherein the temporally stable depth map excludes depths based on distances between the image sensor and dynamic objects.

In some implementations, obtaining the first depth map includes obtaining a three-dimensional model of the physical environment and generating the first depth map, based on the three-dimensional model, a including a plurality of depths respectively associated with a plurality of pixels of the image of the physical environment. In various implementations, the three-dimensional model includes a three-dimensional mesh. In various implementations, the three-dimensional model is based on objects in the physical environment determined to be static. In some implementations, the method 1000 further includes the device generating the three-dimensional model, including: determining that one or more points correspond to one or more static objects in the physical environment; and adding the one or more points to the three-dimensional model at one or more locations in a three-dimensional coordinate system of the physical environment corresponding to the one or more static objects in the physical environment.

In some implementations, the method 1000 further includes smoothing the first depth map to fill one or more holes. In some implementations, the method 1000 further includes clamping depth map values associated with the first depth map to a predefined depth value.

The method 1000 continues, in block 1030, with the device generating a second depth map by aligning one or more portions of the first depth map based on a control signal associated with the image of the physical environment. In some implementations, the second depth map is a derivative of the first depth map with at least some updated and/or different depth map values. According to some implementations, at least some of the depth map values for the one or more portions of the first depth map are updated when aligning the one or more portions of the first depth map based on a control signal. In various implementations, the one or more portions of the first depth map are aligned using a guided filter or a joint bilateral filter.

As one example, see the description of within the perspective correction architecture 800B above with respect to Figure 8B, where the depth map refinement engine 842 aligns the processed depth map 815 based on the control signal 841 (e.g., color, texture, luminous intensity, etc. alignment). As another example, see the description of the perspective correction architecture 900B above with respect to Figure 9B, where the depth map refinement engine 842 aligns the unprocessed depth map 805 based on the control signal 841 (e.g., color, texture, luminous intensity, etc. alignment).

In some implementations, the method 1000 further includes the device obtaining the control signal associated with texture alignment, wherein generating the second depth map includes aligning the one or more portions of the first depth map based on at least one texture or texture transition within the image of the physical environment. In some implementations, the method 1000 further includes the device obtaining the control signal associated with color alignment, wherein generating the second depth map includes aligning the one or more portions of the first depth map based on at least one color or color transition within the image of the physical environment. In some implementations, the method 1000 further includes the device obtaining the control signal associated with luminous intensity alignment, wherein generating the second depth map includes aligning the one or more portions of the first depth map based on at least one luminous intensity or luminous intensity transition within the image of the physical environment.

In some implementations, the control signal indicates one or more particular objects within the image of the physical environment, and wherein the one or more portions of the first depth map correspond to the one or more particular objects. In some implementations, the control signal indicates one or more edges within the image of the physical environment, and wherein the one or more portions of the first depth map correspond to the one or more edges.

The method 1000 continues, in block 1040, with the device transforming, using the one or more processors, the image of the physical environment based on the second depth map. In various implementations, the device transforms the image of the physical environment at an image pixel level, an image tile level, or a combination thereof.

In various implementations, the device transforms the image of the physical environment based on a difference between a first perspective of the image sensor and a second perspective. In various implementations, the second perspective is the perspective of a user, e.g., the perspective of an eye of the user. In various implementations, the second perspective is a perspective of a location closer to the eye of the user in one or more directions.

In various implementations, the device performs a projective transformation based on the second depth map and the difference between the first perspective of the image sensor and the second perspective.

In various implementations, the projective transformation is a forward mapping in which, for each pixel of the image of the physical environment at a pixel location in an untransformed space, a new pixel location is determined in a transformed space of the transformed image. In various implementations, the projective transformation is a backwards mapping in which, for each pixel of the transformed image at a pixel location in a transformed space, a source pixel location is determined in an untransformed space of the image of the physical environment.

In various implementations, the source pixel location is determined according to the following equation in which $x_1$ and $y_1$ are the pixel location in the untransformed space, $x_2$ and $y_2$ are the pixel location in the transformed space, $P_2$ is a 4×4 view projection matrix of the second perspective, $P_1$ is a 4×4 view projection matrix of the first perspective of the image sensor, and d is the depth map value at the pixel location:

$$\begin{bmatrix} x_1 \\ y_1 \\ 1 \end{bmatrix} \leftarrow \boldsymbol{P}_1 \cdot \boldsymbol{P}_2^{-1} \cdot \begin{bmatrix} x_2 \\ y_2 \\ 1 \\ \left(\dfrac{1}{d}\right) \end{bmatrix}$$

In various implementations, the source pixel location is determined using the above equation for each pixel in the image of the physical environment. In various implementations, the source pixel location is determined using the above equation for less than each pixel of the image of the physical environment.

In various implementations, the device determines the view projection matrix of the second perspective and the view projection matrix of the first perspective during a calibration and stores data indicative of the view projection matrices (or their product) in a non-transitory memory. The product of the view projection matrices is a transformation matrix that represents a difference between the first perspective of the image sensor and the second perspective.

Thus, in various implementations, transforming the image of the physical environment includes determining, for a plurality of pixels of the transformed image having respective pixel locations, a respective plurality of source pixel locations. In various implementations, determining the respective plurality of source pixel locations includes, for each of the plurality of pixels of the transformed image, multiplying a vector including the respective pixel location and the multiplicative inverse of the respective element of the smooth depth map by a transformation matrix representing the difference between the first perspective of the image sensor and the second perspective.

Using the source pixel locations in the untransformed space and the pixel values of the pixels of the image of the physical environment, the device generates pixel values for each pixel location of the transformed image using interpolation or other techniques.

In various implementations, the device modifies the second depth map before using the second depth map to perform the transformation. For example, in various implementations, transforming the image of the physical environment based on the second depth map further includes smoothing the second depth map to fill holes. For example, in various implementations, the device applies a two-dimensional low-pass filter to the second depth map. As another example, in various implementations, transforming the image of the physical environment based on the second depth map further includes clamping the second depth map. For example, in various implementations, any value in the second depth map that is below a clamping threshold is replaced with the clamping threshold.

The method 1000 continues, in block 1050, with the device displaying, on the display, the transformed image. In various implementations, the transformed image includes XR content. In some implementations, XR content is added to the current image of the physical environment before the transformation (at block 1040). In some implementations, XR content is added to the transformed image. In various implementations, the device determines whether to add the XR content to the image of the physical environment before or after the transformation based on metadata indicative of the XR content's attachment to the physical environment. In various implementations, the device determines whether to add the XR content to the image of the physical environment before or after the transformation based on an amount of XR content (e.g., a percentage of the image of the physical environment containing XR content).

In various implementations, the device determines whether to add the XR content to the image of the environment before or after the transformation based on metadata indicative of a depth of the XR content. Accordingly, in various implementations, the method 1000 includes receiving XR content and XR content metadata, selecting the image of the physical environment or the transformed image based on the XR content metadata, and adding the XR content to the selection.

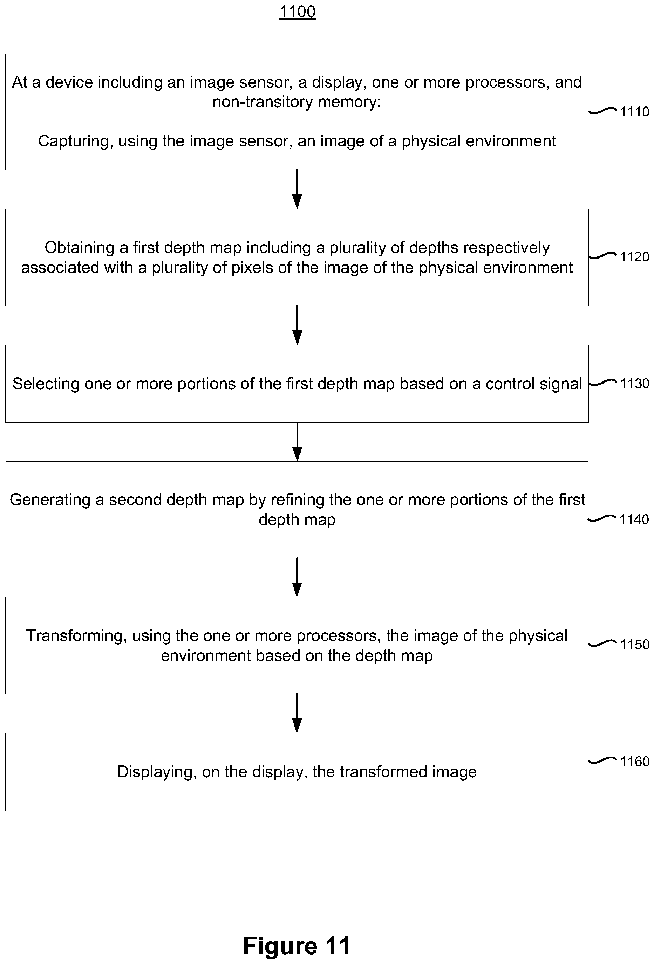

Figure 11 is a flowchart representation of a method of performing perspective correction of an image in accordance with some implementations. In various implementations, the method 1100 is performed by a device with an image sensor, a display, one or more processors, and non-transitory memory (e.g., the electronic device 100 in Figures 1 and 13, the controller 110 in Figures 1 and 12, or a combination thereof). In some implementations, the method 1100 is performed by processing logic, including hardware, firmware, software, or a combination thereof. In some implementations, the method 1100 is performed by a processor executing instructions (e.g., code) stored in a non-transitory computer-readable medium (e.g., a memory).

The method 1100 begins, in block 1110, with the device capturing, using the image sensor, an image of a physical environment.

The method 1100 continues, in block 1120, with the device obtaining a first depth map including a plurality of depths respectively associated with a plurality of pixels of the image of the physical environment.

In some implementations, the first depth map includes, for a particular pixel at a particular pixel location representing a dynamic object in the physical environment, a particular depth corresponding to a distance between the image sensor and a static object in the physical environment behind the dynamic object. In some implementations, obtaining the first depth map includes determining the particular depth via interpolation using depths of locations surrounding the particular pixel location. In some implementations, obtaining the first depth map includes determining the particular depth at a time the dynamic object was not represented at the particular pixel location. In some implementations, obtaining the first depth map includes determining the particular depth based on a three-dimensional model of the physical environment. In some implementations, the three-dimensional model of the physical environment corresponds to a temporally stable three-dimensional model of the physical environment. In some implementations, the three-dimensional model of the physical environment excludes dynamic objects. In various implementations, determining the particular depth based on a three-dimensional model includes rasterizing the three-dimensional model. In various implementations, determining the particular depth based on the three-dimensional model includes ray tracing based on the three-dimensional model.

In some implementations, the first depth map corresponds to a temporally stable depth map including a plurality of depths respectively associated with a plurality of pixels of the image of the physical environment, wherein the temporally stable depth map excludes depths based on distances between the image sensor and dynamic objects.

In some implementations, obtaining the first depth map includes obtaining a three-dimensional model of the physical environment and generating the first depth map, based on the three-dimensional model, a including a plurality of depths respectively associated with a plurality of pixels of the image of the physical environment. In various implementations, the three-dimensional model includes a three-dimensional mesh. In various implementations, the three-dimensional model is based on objects in the physical environment determined to be static. In some implementations, the method 1100 further includes the device generating the three-dimensional model, including: determining that one or more points correspond to one or more static objects in the physical environment; and adding the one or more points to the three-dimensional model at one or more locations in a three-dimensional coordinate system of the physical environment corresponding to the one or more static objects in the physical environment.

In some implementations, the method 1100 further includes smoothing the first depth map to fill one or more holes. In some implementations, the method 1100 further includes clamping depth map values associated with the first depth map to a predefined depth value.

The method 1100 continues, in block 1130, with the device selecting one or more portions of the first depth map based on a control signal associated with the image of the physical environment. In some implementations, the control signal indicates one or more particular objects within the image of the physical environment, and wherein the one or more portions of the first depth map correspond to the one or more particular objects. In some implementations, the control signal indicates one or more edges within the image of the physical environment, and wherein the one or more portions of the first depth map correspond to the one or more edges. In some implementations, the control signal indicates one or more edges for one or more particular objects within the image of the physical environment, and wherein the one or more portions of the first depth map correspond to the one or more edges of the one or more particular objects.

The method 1100 continues, in block 1140, with the device generating a second depth map by refining the one or more portions of the first depth map. In some implementations, the second depth map is a derivative of the first depth map with at least some updated and/or different depth map values. According to some implementations, at least some of the depth map values for the one or more portions of the first depth map are updated or upscaled when refining the one or more portions of the first depth map. In various implementations, the one or more portions of the first depth map are refined using a guided filter, a joint bilateral filter, a machine learning module, or the like. For example, the machine learning module corresponds to a neural network, convolutional neural network, deep neural network, recurrent neural network, state vector machine, or the like.

As one example, see the description of within the perspective correction architecture 800C above with respect to Figure 8C, where the depth map refinement engine 842 regularizes the one or more portions of the processed depth map 815 associated with the temporally stable edges 845. As another example, see the description of the perspective correction architecture 800D above with respect to Figure 8E, where the depth map refinement engine 842 regularizes the one or more portions of the processed depth map 815 associated with the particular objects.

As one example, see the description of within the perspective correction architecture 900C above with respect to Figure 9C, where the depth map refinement engine 842 regularizes the one or more portions of the unprocessed depth map 805 associated with the temporally stable edges 845. As another example, see the description of the perspective correction architecture 900D above with respect to Figure 9D, where the depth map refinement engine 842 regularizes the one or more portions of the processed depth map 815 associated with the particular objects. As yet another example, see the description of the perspective correction architecture 900E above with respect to Figure 9E, where the depth map refinement engine 842 regularizes the one or more portions of the processed depth map 815 associated with the edges of particular objects.

In some implementations, the one or more portions of the first depth map are refined by upscaling depth map values associated with the one or more portions of the first depth map. In some implementations, the one or more portions of the first depth map are refined by regularizing depth map values associated with the one or more portions of the first depth map.

The method 1100 continues, in block 1150, with the device transforming, using the one or more processors, the image of the physical environment based on the second depth map. In various implementations, the device transforms the image of the physical environment at an image pixel level, an image tile level, or a combination thereof.

In various implementations, the device transforms the image of the physical environment based on a difference between a first perspective of the image sensor and a second perspective. In various implementations, the second perspective is the perspective of a user, e.g., the perspective of an eye of the user. In various implementations, the second perspective is a perspective of a location closer to the eye of the user in one or more directions.

In various implementations, the device performs a projective transformation based on the second depth map and the difference between the first perspective of the image sensor and the second perspective.

In various implementations, the projective transformation is a forward mapping in which, for each pixel of the image of the physical environment at a pixel location in an untransformed space, a new pixel location is determined in a transformed space of the transformed image. In various implementations, the projective transformation is a backwards mapping in which, for each pixel of the transformed image at a pixel location in a transformed space, a source pixel location is determined in an untransformed space of the image of the physical environment.

In various implementations, the source pixel location is determined according to the following equation in which $x_1$ and $y_1$ are the pixel location in the untransformed space, $x_2$ and $y_2$ are the pixel location in the transformed space, $\mathbf{P}_2$ is a 4×4 view projection matrix of the second perspective, $\mathbf{P}_1$ is a 4×4 view projection matrix of the first perspective of the image sensor, and $d$ is the depth map value at the pixel location:

$$\begin{bmatrix} x_1 \\ y_1 \\ 1 \end{bmatrix} \leftarrow \boldsymbol{P}_1 \cdot \boldsymbol{P}_2^{-1} \cdot \begin{bmatrix} x_2 \\ y_2 \\ 1 \\ \left(\dfrac{1}{d}\right) \end{bmatrix}$$

In various implementations, the source pixel location is determined using the above equation for each pixel in the image of the physical environment. In various implementations, the source pixel location is determined using the above equation for less than each pixel of the image of the physical environment.

In various implementations, the device determines the view projection matrix of the second perspective and the view projection matrix of the first perspective during a calibration and stores data indicative of the view projection matrices (or their product) in a non-transitory memory. The product of the view projection matrices is a transformation matrix that represents a difference between the first perspective of the image sensor and the second perspective.

Thus, in various implementations, transforming the image of the physical environment includes determining, for a plurality of pixels of the transformed image having respective pixel locations, a respective plurality of source pixel locations. In various implementations, determining the respective plurality of source pixel locations includes, for each of the plurality of pixels of the transformed image, multiplying a vector including the respective pixel location and the multiplicative inverse of the respective element of the smooth depth map by a transformation matrix representing the difference between the first perspective of the image sensor and the second perspective.

Using the source pixel locations in the untransformed space and the pixel values of the pixels of the image of the physical environment, the device generates pixel values for each pixel location of the transformed image using interpolation or other techniques.

In various implementations, the device modifies the second depth map before using the second depth map to perform the transformation. For example, in various implementations, transforming the image of the physical environment based on the second depth map further includes smoothing the second depth map to fill holes. For example, in various implementations, the device applies a two-dimensional low-pass filter to the second depth map. As another example, in various implementations, transforming the image of the physical environment based on the second depth map further includes clamping the second depth map. For example, in various implementations, any value in the second depth map that is below a clamping threshold is replaced with the clamping threshold.

The method 1100 continues, in block 1160, with the device displaying, on the display, the transformed image. In various implementations, the transformed image includes XR content. In some implementations, XR content is added to the current image of the physical environment before the transformation (at block 1150). In some implementations, XR content is added to the transformed image. In various implementations, the device determines whether to add the XR content to the image of the physical environment before or after the transformation based on metadata indicative of the XR content's attachment to the physical environment. In various implementations, the device determines whether to add the XR content to the image of the physical environment before or after the transformation based on an amount of XR content (e.g., a percentage of the image of the physical environment containing XR content).

In various implementations, the device determines whether to add the XR content to the image of the environment before or after the transformation based on metadata indicative of a depth of the XR content. Accordingly, in various implementations, the method 1100 includes receiving XR content and XR content metadata, selecting the image of the physical environment or the transformed image based on the XR content metadata, and adding the XR content to the selection.

Figure 12 is a block diagram of an example of the controller 110 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the controller 110 includes one or more processing units 1202 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 1206, one or more communication interfaces 1208 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 1210, a memory 1220, and one or more communication buses 1204 for interconnecting these and various other components.

In some implementations, the one or more communication buses 1204 include circuitry that interconnects and controls communications between system components. In some implementations, the one or more I/O devices 1206 include at least one of a keyboard, a mouse, a touchpad, a joystick, one or more microphones, one or more speakers, one or more image sensors, one or more displays, and/or the like.

The memory 1220 includes high-speed random-access memory, such as dynamic random-access memory (DRAM), static random-access memory (SRAM), double-data-rate random-access memory (DDR RAM), or other random-access solid-state memory devices. In some implementations, the memory 1220 includes non-volatile memory, such as one or more magnetic disk storage devices, optical disk storage devices, flash memory devices, or other non-volatile solid-state storage devices. The memory 1220 optionally includes one or more storage devices remotely located from the one or more processing units 1202. The memory 1220 comprises a non-transitory computer readable storage medium. In some implementations, the memory 1220 or the non-transitory computer readable storage medium of the memory 1220 stores the following programs, modules and data structures, or a subset thereof including an optional operating system 1230 and an XR experience module 1240.

The operating system 1230 includes procedures for handling various basic system services and for performing hardware dependent tasks. In some implementations, the XR experience module 1240 is configured to manage and coordinate one or more XR experiences for one or more users (e.g., a single XR experience for one or more users, or multiple XR experiences for respective groups of one or more users). To that end, in various implementations, the XR experience module 1240 includes a data obtaining unit 1242, a tracking unit 1244, a coordination unit 1246, and a data transmitting unit 1248.

In some implementations, the data obtaining unit 1242 is configured to obtain data (e.g., presentation data, interaction data, sensor data, location data, etc.) from at least the electronic device 120 of Figure 1. To that end, in various implementations, the data obtaining unit 1242 includes instructions and/or logic therefor, and heuristics and metadata therefor.

In some implementations, the tracking unit 1244 is configured to map the physical environment 105 and to track the position/location of at least the electronic device 120 with respect to the physical environment 105 of Figure 1. To that end, in various implementations, the tracking unit 1244 includes instructions and/or logic therefor, and heuristics and metadata therefor.

In some implementations, the coordination unit 1246 is configured to manage and coordinate the XR experience presented to the user by the electronic device 120. To that end, in various implementations, the coordination unit 1246 includes instructions and/or logic therefor, and heuristics and metadata therefor.

In some implementations, the data transmitting unit 1248 is configured to transmit data (e.g., presentation data, location data, etc.) to at least the electronic device 120. To that end, in various implementations, the data transmitting unit 1248 includes instructions and/or logic therefor, and heuristics and metadata therefor.

Although the data obtaining unit 1242, the tracking unit 1244, the coordination unit 1246, and the data transmitting unit 1248 are shown as residing on a single device (e.g., the controller 110), it should be understood that in other implementations, any combination of the data obtaining unit 1242, the tracking unit 1244, the coordination unit 1246, and the data transmitting unit 1248 may be located in separate computing devices.

Moreover, Figure 12 is intended more as functional description of the various features that may be present in a particular implementation as opposed to a structural schematic of the implementations described herein. As recognized by those of ordinary skill in the art, items shown separately could be combined and some items could be separated. For example, some functional modules shown separately in Figure 12 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

Figure 13 is a block diagram of an example of the electronic device 120 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the electronic device 120 includes one or more processing units 1302 (e.g., microprocessors, ASICs, FPGAs, GPUs, CPUs, processing cores, and/or the like), one or more input/output (I/O) devices and sensors 1306, one or more communication interfaces 1308 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 1310, one or more XR displays 1312, one or more optional interior- and/or exterior-facing image sensors 1314, a memory 1320, and one or more communication buses 1304 for interconnecting these and various other components.

In some implementations, the one or more communication buses 1304 include circuitry that interconnects and controls communications between system components. In some implementations, the one or more I/O devices and sensors 1306 include at least one of an inertial measurement unit (IMU), an accelerometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more XR displays 1312 are configured to provide the XR experience to the user. In some implementations, the one or more XR displays 1312 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more XR displays 1312 correspond to diffractive, reflective, polarized, holographic, etc. waveguide displays. For example, the electronic device 120 includes a single XR display. In another example, the electronic device includes an XR display for each eye of the user. In some implementations, the one or more XR displays 1312 are capable of presenting MR and VR content.

In some implementations, the one or more image sensors 1314 are configured to obtain image data that corresponds to at least a portion of the face of the user that includes the eyes of the user (any may be referred to as an eye-tracking camera). In some implementations, the one or more image sensors 1314 are configured to be forward-facing so as to obtain image data that corresponds to the physical environment as would be viewed by the user if the electronic device 120 was not present (and may be referred to as a scene camera). The one or more optional image sensors 1314 can include one or more RGB cameras (e.g., with a complimentary metal-oxide-semiconductor (CMOS) image sensor or a charge-coupled device (CCD) image sensor), one or more infrared (IR) cameras, one or more event-based cameras, and/or the like.

The memory 1320 includes high-speed random-access memory, such as DRAM, SRAM, DDR RAM, or other random-access solid-state memory devices. In some implementations, the memory 1320 includes non-volatile memory, such as one or more magnetic disk storage devices, optical disk storage devices, flash memory devices, or other non-volatile solid-state storage devices. The memory 1320 optionally includes one or more storage devices remotely located from the one or more processing units 1302. The memory 1320 comprises a non-transitory computer readable storage medium. In some implementations, the memory 1320 or the non-transitory computer readable storage medium of the memory 1320 stores the following programs, modules and data structures, or a subset thereof including an optional operating system 1330 and an XR presentation module 1340.

The operating system 1330 includes procedures for handling various basic system services and for performing hardware dependent tasks. In some implementations, the XR presentation module 1340 is configured to present XR content to the user via the one or more XR displays 1312. To that end, in various implementations, the XR presentation module 1340 includes a data obtaining unit 1342, a perspective transforming unit 1344, an XR presenting unit 1346, and a data transmitting unit 1348.

In some implementations, the data obtaining unit 1342 is configured to obtain data (e.g., presentation data, interaction data, sensor data, location data, etc.) from at least the controller 110 of Figure 1. To that end, in various implementations, the data obtaining unit 1342 includes instructions and/or logic therefor, and heuristics and metadata therefor.

In some implementations, the perspective transforming unit 1344 is configured to perform perspective correction using a refined depth map (e.g., the refined depth maps 843A-843D in Figures 8B-8F and the refined depth maps 915A-915E in Figures 9B-9F). To that end, in various implementations, the perspective transforming unit 1344 includes instructions and/or logic therefor, and heuristics and metadata therefor.

In some implementations, the XR presenting unit 1346 is configured to display the transformed image via the one or more XR displays 1312. To that end, in various implementations, the XR presenting unit 1346 includes instructions and/or logic therefor, and heuristics and metadata therefor.

In some implementations, the data transmitting unit 1348 is configured to transmit data (e.g., presentation data, location data, etc.) to at least the controller 110. In some implementations, the data transmitting unit 1348 is configured to transmit authentication credentials to the electronic device. To that end, in various implementations, the data transmitting unit 1348 includes instructions and/or logic therefor, and heuristics and metadata therefor.

Although the data obtaining unit 1342, the perspective transforming unit 1344, the XR presenting unit 1346, and the data transmitting unit 1348 are shown as residing on a single device (e.g., the electronic device 120), it should be understood that in other implementations, any combination of the data obtaining unit 1342, the perspective transforming unit 1344, the XR presenting unit 1346, and the data transmitting unit 1348 may be located in separate computing devices.

Moreover, Figure 13 is intended more as a functional description of the various features that could be present in a particular implementation as opposed to a structural schematic of the implementations described herein. As recognized by those of ordinary skill in the art, items shown separately could be combined and some items could be separated. For example, some functional modules shown separately in Figure 13 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary methods, devices, and non-transitory memory are set out in the following items.

1. A method comprising:
at a device including an image sensor, a display, one or more processors, and non-transitory memory:

capturing, using the image sensor, an image of a physical environment;
obtaining a first depth map including a plurality of depths respectively associated with a plurality of pixels of the image of the physical environment;
generating a second depth map by aligning one or more portions of the first depth map based on a control signal associated with the image of the physical environment;
transforming, using the one or more processors, the image of the physical environment based on the second depth map; and
displaying, via the display, the transformed image.

2. The method of item 1, further comprising:
obtaining the control signal associated with texture alignment, wherein generating the second depth map includes aligning the one or more portions of the first depth map based on at least one texture or texture transition within the image of the physical environment.

3. The method of item 1, further comprising:
obtaining the control signal associated with color alignment, wherein generating the second depth map includes aligning the one or more portions of the first depth map based on at least one color or color transition within the image of the physical environment.

4. The method of item 1, further comprising:
obtaining the control signal associated with luminous intensity alignment, wherein generating the second depth map includes aligning the one or more portions of the first depth map based on at least one luminous intensity or luminous intensity transition within the image of the physical environment.

5. The method of any of items 1-4, wherein the one or more portions of the first depth map are aligned using a joint bilateral filter.

6. The method of any of items 1-5, wherein the control signal indicates one or more particular objects within the image of the physical environment, and wherein the one or more portions of the first depth map correspond to the one or more particular objects.

7. The method of any of items 1-5, wherein the control signal indicates one or more edges within the image of the physical environment, and wherein the one or more portions of the first depth map correspond to the one or more edges.

8. The method of any of items 1-7, wherein the first depth map includes, for a particular pixel at a particular pixel location representing a dynamic object in the physical environment, a particular depth corresponding to a distance between the image sensor and a static object in the physical environment behind the dynamic object

9. The method of item 8, wherein obtaining the first depth map includes determining the particular depth via interpolation using depths of locations surrounding the particular pixel location.

10. The method of item 8 or 9, wherein obtaining the first depth map includes determining the particular depth at a time the dynamic object was not represented at the particular pixel location.

11. The method of any of items 8-10, wherein obtaining the first depth map includes determining the particular depth based on a three-dimensional model of the physical environment.

12. The method of item 11, wherein determining the particular depth based on a three-dimensional model includes rasterizing the three-dimensional model.

13. The method of item 11, wherein determining the particular depth based on the three-dimensional model includes ray tracing based on the three-dimensional model.

14. The method of any of items 11-13 wherein the three-dimensional model of the physical environment corresponds to a temporally stable three-dimensional model of the physical environment.

15. The method of any of items 11-13 wherein the three-dimensional model of the physical environment excludes dynamic objects.

16. The method of any of items 1-7, wherein the first depth map corresponds to a temporally stable depth map including a plurality of depths respectively associated with a plurality of pixels of the image of the physical environment, wherein the temporally stable depth map excludes depths based on distances between the image sensor and dynamic objects.

17. The method of any of items 1-7, wherein obtaining the first depth map includes obtaining a three-dimensional model of the physical environment and generating the first depth map, based on the three-dimensional model, a including a plurality of depths respectively associated with a plurality of pixels of the image of the physical environment.

18. The method of item 17, wherein the three-dimensional model includes a three-dimensional mesh.

19. The method of item 17 or 18, wherein the three-dimensional model is based on objects in the physical environment determined to be static.

20. The method of any of items 17-19, further comprising:
generating the three-dimensional model, including:

    determining that one or more points correspond to one or more static objects in the physical environment; and
adding the one or more points to the three-dimensional model at one or more locations in a three-dimensional coordinate system of the physical environment corresponding to the one or more static objects in the physical environment.

21. The method of any of items 1-20, further comprising:
smoothing at least one of the first or second depth maps to fill one or more holes.

22. The method of any of items 1-21, further comprising:
clamping depth map values associated with at least one of the first or second depth maps to a predefined depth value.

23. A device comprising:

    a display;
    an image sensor;
    one or more processors;
    non-transitory memory; and
    one or more programs stored in the non-transitory memory, which, when executed by the one or more processors, cause the device to perform any of the methods of items 1-22.

24. A non-transitory memory storing one or more programs, which, when executed by one or more processors of a device with a display and an image sensor, cause the device to perform any of the methods of items 1-22.

25. A device comprising:

    a display;
    an image sensor;
    one or more processors;
    a non-transitory memory; and
    means for causing the device to perform any of the methods of items 1-22.

26. A method comprising:
at a device including an image sensor, a display, one or more processors, and non-transitory memory:

    capturing, using the image sensor, an image of a physical environment;
    obtaining a first depth map including a plurality of depths respectively associated with a plurality of pixels of the image of the physical environment;
    selecting one or more portions of the first depth map based on a control signal associated with the image of the physical environment;
    generating a second depth map by refining the one or more portions of the first depth map;
    transforming, using the one or more processors, the image of the physical environment based on the second depth map; and

displaying, via the display, the transformed image.

27. The method of item 26, wherein the one or more portions of the first depth map are refined by upscaling depth map values associated with the one or more portions of the first depth map.

28. The method of item 26, wherein the one or more portions of the first depth map are refined by regularizing depth map values associated with the one or more portions of the first depth map.

29. The method of any of items 26-28, wherein the one or more portions of the first depth map are refined using a joint bilateral filter or a machine learning module.

30. The method of any of items 26-29, wherein the control signal indicates one or more particular objects within the image of the physical environment, and wherein the one or more portions of the first depth map correspond to the one or more particular objects.

31. The method of any of items 26-29, wherein the control signal indicates one or more edges within the image of the physical environment, and wherein the one or more portions of the first depth map correspond to the one or more edges.

32. The method of any of items 26-29, wherein the control signal indicates one or more edges for one or more particular objects within the image of the physical environment, and wherein the one or more portions of the first depth map correspond to the one or more edges of the one or more particular objects.

33. The method of any of items 26-32, wherein the first depth map includes, for a particular pixel at a particular pixel location representing a dynamic object in the physical environment, a particular depth corresponding to a distance between the image sensor and a static object in the physical environment behind the dynamic object

34. The method of item 33, wherein obtaining the first depth map includes determining the particular depth via interpolation using depths of locations surrounding the particular pixel location.

35. The method of item 33 or 34, wherein obtaining the first depth map includes determining the particular depth at a time the dynamic object was not represented at the particular pixel location.

36. The method of any of items 33-35, wherein obtaining the first depth map includes determining the particular depth based on a three-dimensional model of the physical environment.

37. The method of item 36, wherein determining the particular depth based on a three-dimensional model includes rasterizing the three-dimensional model.

38. The method of item 36, wherein determining the particular depth based on the three-dimensional model includes ray tracing based on the three-dimensional model.

39. The method of any of items 36-38, wherein the three-dimensional model of the physical environment corresponds to a temporally stable three-dimensional model of the physical environment.

40. The method of any of items 36-38, wherein the three-dimensional model of the physical environment excludes dynamic objects.

41. The method of any of items 26-40, wherein the first depth map corresponds to a temporally stable depth map including a plurality of depths respectively associated with a plurality of pixels of the image of the physical environment, wherein the temporally stable depth map excludes depths based on distances between the image sensor and dynamic objects.

42. The method of any of items 26-40, wherein obtaining the first depth map includes obtaining a three-dimensional model of the physical environment and generating the first depth map, based on the three-dimensional model, a including a plurality of depths respectively associated with a plurality of pixels of the image of the physical environment.

43. The method of item 42, wherein the three-dimensional model includes a three-dimensional mesh.

44. The method of item 42 or 43, wherein the three-dimensional model is based on objects in the physical environment determined to be static.

45. The method of any of items 42-44, further comprising:

generating the three-dimensional model, including:

determining that one or more points correspond to one or more static objects in the physical environment; and

adding the one or more points to the three-dimensional model at one or more locations in a three-dimensional coordinate system of the physical environment corresponding to the one or more static objects in the physical environment.

46. The method of any of items 26-45, further comprising:

smoothing at least one of the first or second depth maps to fill one or more holes.

47. The method of any of items 26-46, further comprising:

clamping depth map values associated with at least one of the first or second depth maps to a predefined depth value.

48. A device comprising:

a display;
an image sensor;
one or more processors;
non-transitory memory; and
one or more programs stored in the non-transitory memory, which, when executed by the one or more processors, cause the device to perform any of the methods of items 26-47.

49. A non-transitory memory storing one or more programs, which, when executed by one or more processors of a device with a display and an image sensor, cause the device to perform any of the methods of items 26-47.

50. A device comprising:

a display;
an image sensor;
one or more processors;
a non-transitory memory; and
means for causing the device to perform any of the methods of items 26-47.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. A method comprising:
   at a device including an image sensor, a display, one or more processors, and a non-transitory memory:

   capturing, using the image sensor, an image of a physical environment;
   obtaining a first depth map including a plurality of depths respectively associated with a plurality of pixels of the image of the physical environment;
   generating a second depth map by aligning one or more portions of the first depth map based on a control signal associated with the image of the physical environment;
   transforming, using the one or more processors, the image of the physical environment based on the second depth map; and
   displaying, via the display, the transformed image.

2. The method of claim 1, further comprising:
   obtaining the control signal associated with texture alignment, wherein generating the second depth map includes aligning the one or more portions of the first depth map based on at least one texture or texture transition within the image of the physical environment.

3. The method of any of the preceding claims, further comprising:
   obtaining the control signal associated with color alignment, wherein generating the second depth map includes aligning the one or more portions of the first depth map based on at least one color or color transition within the image of the physical environment.

4. The method of any of the preceding claims, further comprising:
   obtaining the control signal associated with luminous intensity alignment, wherein generating the second depth map includes aligning the one or more portions of the first depth map based on at least one luminous intensity or luminous intensity transition within the image of the physical environment.

5. The method of any of the preceding claims, wherein the control signal indicates one or more particular objects within the image of the physical environment, and wherein the one or more portions of the first depth map correspond to the one or more particular objects.

6. The method of any of the preceding claims, wherein the control signal indicates one or more edges within the image of the physical environment, and wherein the one or more portions of the first depth map correspond to the one or more edges.

7. The method of any of the preceding claims, wherein the first depth map includes, for a particular pixel at a particular pixel location representing a dynamic object in the physical environment, a particular depth corresponding to a distance between the image sensor and a static object in the physical environment behind the dynamic object.

8. The method of claim 7, wherein obtaining the first depth map includes at least one of:

   determining the particular depth via interpolation using depths of locations surrounding the particular pixel location;
   determining the particular depth at a time the dynamic object was not represented at the particular pixel location; or
   determining the particular depth based on a three-dimensional model of the physical environment.

9. The method of claim 8, wherein determining the particular depth based on a three-dimensional model includes at least one of:

rasterizing the three-dimensional model; or
ray tracing based on the three-dimensional model.

10. The method of claim 8, wherein the three-dimensional model of the physical environment corresponds to a temporally stable three-dimensional model of the physical environment.

11. The method of claim 8, wherein the three-dimensional model of the physical environment excludes dynamic objects.

12. The method of any of the preceding claims, wherein the first depth map corresponds to a temporally stable depth map including a plurality of depths respectively associated with a plurality of pixels of the image of the physical environment, wherein the temporally stable depth map excludes depths based on distances between the image sensor and dynamic objects.

13. The method of any of the preceding claims, wherein obtaining the first depth map includes obtaining a three-dimensional model of the physical environment and generating the first depth map, based on the three-dimensional model, the first depth map including a plurality of depths respectively associated with a plurality of pixels of the image of the physical environment.

14. The method claim 13, further comprising:
generating the three-dimensional model, at least in part by:

determining that one or more points correspond to one or more static objects in the physical environment; and
adding the one or more points to the three-dimensional model at one or more locations in a three-dimensional coordinate system of the physical environment corresponding to the one or more static objects in the physical environment.

15. A device comprising:

a display;
an image sensor;
one or more processors;
a non-transitory memory; and
one or more programs stored in the non-transitory memory, that, when executed by the one or more processors, cause the device to perform a method comprising:

capturing, using the image sensor, an image of a physical environment;
obtaining a first depth map including a plurality of depths respectively associated with a plurality of pixels of the image of the physical environment;
generating a second depth map by aligning one or more portions of the first depth map based on a control signal associated with the image of the physical environment;
transforming, using the one or more processors, the image of the physical environment based on the second depth map; and
displaying, via the display, the transformed image.

**Figure 1**

200

210
230

220
241

242

**Figure 2**

300

301

310

311

312

313

A B C

D

E F G

**Figure 3**

EP 4 472 192 A1

**Figure 4**

501

310

311

312

B C E F G

599

**Figure 5A**

502

310

311

312

B C F G

599

**Figure 5B**

**Figure 6A**

**Figure 6B**

701

310

311

312

B C E F G

599

**Figure 7A**

702

310

311

312

B C E F G

599

**Figure 7B**

Figure 8A

Figure 8B

**Figure 8C**

EP 4 472 192 A1

Edge Analysis Engine 844

803 → Edge Detection Module 852

805 → Edge Detection Module 852

Edge Detection Module 852 → Edge Points 853 → Point Refinement Module 854 → Refined Edge Points 855 → Edge Clustering & Flood Fill Module 856

Edge Clustering & Flood Fill Module 856 → Edge Segments 857 → Edge Filtering Module 858

Edge Filtering Module 858 → Filtered Edge Segments 859 → Parametric Fitting Module 862 → Fitted Models 863 → Tracking Module 864 → Temporally Stable Edges 845

EP 4 472 192 A1

**Figure 8D**

Figure 8E

Figure 8F

EP 4 472 192 A1

900A

**Figure 9A**

**Figure 9B**

EP 4 472 192 A1

900C

| 803 |

| 805 |

Depth Map
Refinement
Engine 842

| 915B |

Transformation
Engine 822

| 823 |

Edge
Analysis
Engine 844

Temporally
Stable
Edges 845

EP 4 472 192 A1

**Figure 9C**

EP 4 472 192 A1

900D

803

805

Semantic
Analysis
Engine 882

883

Semantic Filter
884

Depth Map
Refinement
Engine 842

915C

Transformation
Engine 822

823

**Figure 9D**

**Figure 9E**

EP 4 472 192 A1

900F

```
803 ──●──────────────►  Grayscale
          │              Converter 932  ──►  Depth Map
          │                                   Refinement  ──►  915E  ──►  Transformation
805 ──────────────────────────────────────►  Engine 842                  Engine 822
                                                                              │
                                                                              ▼
                                                                             823
```

**Figure 9F**

<u>1000</u>

At a device including an image sensor, a display, one or more processors, and non-transitory memory:

Capturing, using the image sensor, an image of a physical environment

1010

Obtaining a first depth map including a plurality of depths respectively associated with a plurality of pixels of the image of the physical environment

1020

Generating a second depth map by aligning one or more portions of the first depth map based on a control signal associated with the image of the physical environment

1030

Transforming, using the one or more processors, the image of the physical environment based on the second depth map

1040

Displaying, on the display, the transformed image

1050

# Figure 10

<u>1100</u>

At a device including an image sensor, a display, one or more processors, and non-transitory memory:

Capturing, using the image sensor, an image of a physical environment ⌒1110

↓

Obtaining a first depth map including a plurality of depths respectively associated with a plurality of pixels of the image of the physical environment ⌒1120

↓

Selecting one or more portions of the first depth map based on a control signal ⌒1130

↓

Generating a second depth map by refining the one or more portions of the first depth map ⌒1140

↓

Transforming, using the one or more processors, the image of the physical environment based on the depth map ⌒1150

↓

Displaying, on the display, the transformed image ⌒1160

# Figure 11

Controller 110

Processing Unit(s) 1202

Comm. Interface(s) 1208

1204

I/O Devices 1206

Programming Interface(s) 1210

Memory 1220

Operating System 1230

XR Experience Module 1240

Data Obtaining Unit 1242

Tracking Unit 1244

Coordination Unit 1246

Data Transmitting Unit 1248

**Figure 12**

EP 4 472 192 A1

Electronic Device 120

Processing Unit(s) 1302

Comm. Interface(s) 1308

XR Display(s) 1312

Memory 1320

Operating System 1330

XR Presentation Module 1340

Data Obtaining Unit 1342

Perspective Transforming Unit 1344

XR Presenting Unit 1346

Data Transmitting Unit 1348

1304

I/O Devices & Sensors 1306

Programming Interface(s) 1310

Image Sensor(s) 1314

**Figure 13**

EP 4 472 192 A1

Europäisches
Patentamt

European
Patent Office

Office européen
des brevets

# EUROPEAN SEARCH REPORT

**Application Number**

EP 24 17 7653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 972 712 B2 (CT INTEGRATED SMART SENSORS FOUND [KR]) 6 April 2021 (2021-04-06) * column 8, line 60 - column 9, line 53; figure 8 * * column 5, line 22 - line 30; figure 1 * | 1-15 | INV. H04N13/128 |
| A | US 2015/294473 A1 (MICHOT JULIEN [SE] ET AL) 15 October 2015 (2015-10-15) * paragraph [0051] * | 2 | |
| A | CN 112 991 193 A (UNIV WUHAN SCIENCE & TECH) 18 June 2021 (2021-06-18) * paragraph [0004] - paragraph [0011] * | 3 | |
| A | US 8 780 172 B2 (GIRDZIJAUSKAS IVANA [SE]; FROJDH PER [SE] ET AL.) 15 July 2014 (2014-07-15) * column 2, line 16 - line 32 * | 4 | |
| A | CN 111 238 465 B (DELTA ELECTRONICS INC) 18 February 2022 (2022-02-18) * paragraph [0086] * | 12 | **TECHNICAL FIELDS SEARCHED (IPC)** H04N |

The present search report has been drawn up for all claims

| Place of search | Date of completion of the search | Examiner |
|---|---|---|
| The Hague | 24 September 2024 | Wahba, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7653

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | | Publication date | Patent family member(s) | | Publication date |
|---|---|---|---|---|---|
| US 10972712 | B2 | 06-04-2021 | KR 20190062794 A | | 07-06-2019 |
| | | | US 2019166350 A1 | | 30-05-2019 |
| US 2015294473 | A1 | 15-10-2015 | EP 2917893 A1 | | 16-09-2015 |
| | | | US 2015294473 A1 | | 15-10-2015 |
| | | | WO 2014074039 A1 | | 15-05-2014 |
| CN 112991193 | A | 18-06-2021 | NONE | | |
| US 8780172 | B2 | 15-07-2014 | EP 2382791 A1 | | 02-11-2011 |
| | | | JP 5329677 B2 | | 30-10-2013 |
| | | | JP 2012516493 A | | 19-07-2012 |
| | | | US 2011285813 A1 | | 24-11-2011 |
| | | | WO 2010087751 A1 | | 05-08-2010 |
| CN 111238465 | B | 18-02-2022 | CN 111238465 A | | 05-06-2020 |
| | | | JP 6854840 B2 | | 07-04-2021 |
| | | | JP 2020087407 A | | 04-06-2020 |
| | | | SG 10201902452W A | | 29-06-2020 |
| | | | US 2020167993 A1 | | 28-05-2020 |

EPO FORM P0459

For more details about this annex : see Official Journal of the European Patent Office, No. 12/82